# EUROPEAN PATENT SPECIFICATION

(11) **EP 2 964 942 B1**
(45) Date of publication and mention of the grant of the patent: **31.01.2018**
(21) Application number: 14760396.3
(22) Date of filing: 28.02.2014
(51) Int. Cl.: F02G 5/02, F28D 9/00, F28F 27/02, F28F 3/06, F28F 3/08, F01N 5/02, F28D 21/00

(54) **HEAT RECOVERY SYSTEM AND HEAT EXCHANGER**
WÄRMERÜCKGEWINNUNGSSYSTEM UND WÄRMETAUSCHER
SYSTÈME DE RÉCUPÉRATION DE CHALEUR ET ÉCHANGEUR DE CHALEUR

(30) Priority: 05.03.2013 US 201361772578 P; 26.02.2014 US 201414190648
(43) Date of publication of application: 13.01.2016
(73) Proprietor: Wescast Industries, Inc., Brantford ON N3T 5L8 (CA)
(72) Inventor: SLOSS, Clayton A., Paris, Ontario N3L 4C2 (CA)
(74) Representative: Langan, Hans
(86) International application number: PCT/IB2014/059319
(87) International publication number: WO 2014/136024

(56) References cited:
- WO-A1-2013/033839
- WO-A2-2008/114005
- WO-A2-2012/056179
- US-A1- 2008 314 569
- US-A1- 2009 013 677

## Description

### FIELD OF THE INVENTION

The present disclosure relates to a compact heat exchanger and a flow control assembly, and more particularly, an automotive exhaust heat recovery system and heat exchanger.

### BACKGROUND

This section provides background information related to the present disclosure and is not necessarily prior art.

A significant amount (e.g., approximately one-third) of energy in fuel consumed by an internal combustion engine is lost as heat rejected through an exhaust system associated with the internal combustion engine. It is desirable to recover this heat or thermal energy from exhaust gas flowing through the exhaust system for various purposes. For example, such recovered thermal energy can be used to heat vehicle fluids to provide faster passenger cabin warm-up and windshield defrosting. Additionally or alternatively, the recovered thermal energy can be used to improve fuel economy by reducing friction and viscous losses in the vehicle lubrication systems, for example in the engine, transmission, or transaxle, by increasing the temperature of the corresponding lubricants in those systems.

Recovering the heat from exhaust gases can pose technical challenges with respect to the heat recovery device, especially with the heat exchanger. The heat recovery system must overcome harsh operating conditions (e.g., heat, oxidation, and corrosion) while extracting a desired amount of heat with minimal backpressure. Additional constraints are applied to this scenario when the requirements for compact size, light weight, and low cost are needed for implementation into automobiles. Additionally, the ability to have a bypass mode where the back pressure and heat transfer are minimized may be desirable for some engine operating conditions or vehicle applications. WO-A-2008/114005 discloses a system for recovering heat from exhaust gas of an internal combustion engine according to the preamble of claim 1.

### SUMMARY

This invention provides a system for recovering heat from exhaust gas of an internal combustion engine in accordance with claim 1. Advantageous embodiments of the invention are defined in claims 2-12. This section provides a general summary of the disclosure, and is not a comprehensive disclosure of its full scope or all of its features.

The present disclosure provides a heat exchanger assembly disposed in an exhaust gas stream that may recover thermal energy from the exhaust gas stream. The heat exchanger assembly may be coupled with a valve element that can be controlled to regulate a flow of exhaust gas through either or both of a heat exchanger flow path and a bypass flow path that bypasses the heat exchanger flow path. The valve element may be controlled by an external actuator and may be positioned depending upon operating conditions of the exhaust gases, working limits of the heat exchanger, and/or demand for thermal energy recovery, for example. The heat exchanger flow path and the bypass flow path may terminate in a common collector which has an outlet to connect with the remainder of the exhaust system. The assembly can be placed at any location within the exhaust stream. Locations relatively close to the engine may have the potential to provide the heat exchanger with the hottest exhaust gas temperatures, which may increase an amount of thermal energy that the assembly is able to recover. However, the higher the exhaust gas temperature the more demanding it is for the durability of the heat recovery system due to the increased thermal loading.

The controllable heat recovery assembly can be used with an internal combustion engine, such as in an automobile, for example, or any other combustion engine. Recovered thermal energy may be used for rapid warm-up of engine coolant to aid in faster windshield defrosting, improved HVAC (heating, ventilation and air conditioning) system performance for accelerated passenger cabin warm up, and/or to improve fuel economy by reducing viscous losses through heating of various fluid systems in the vehicle, such as engine oil and transmission fluid, for example. Further uses of the recovered thermal energy may include steam generation for power generation (e.g., in Rankine cycle systems). It will be appreciated that the heat exchangers disclosed herein could be used with thermoelectric devices to generate electricity from the thermal energy in the exhaust gases.

During some periods of operation of the engine, it may not be desirable to extract energy from the exhaust system. During these periods it may be desirable to route exhaust gases through a bypass flow path. It may be desirable to minimize any heat transfer from the exhaust gases to the working fluid during bypass flow operation. During other operating conditions, when heat extraction is desirable, some or all of the exhaust gas may be diverted through a flow path including the heat exchanger. The routing of exhaust gas may be controlled in such a way that it is throttled or adjusted to a certain percentage of flow through each of the bypass and heat exchanger flow paths. In some embodiments, a control module may send electronic signals to an actuator driving the valve assembly to control and adjust a position of the valve assembly based on operating conditions and parameters of various engine and vehicle systems and subsystems. In some embodiments, a thermally controlled actuator may be used to control the position of the valve assembly. Such a thermally controlled actuator could include a wax valve, a thermostat device, and/or any other device configured to actuate the valve assembly in response to exhaust gases, coolant and/or any other fluid reaching one or more predetermined thermal states.

Regulation of the exhaust flows through the bypass and heat exchanger flow paths allows for control over the amount of heat energy that is able to be recovered or extracted from the exhaust gases. Heat energy recovery from the exhaust gas may be desirable following a start-up of the engine, for example. Under cold start-up conditions, it may be desirable to maximize heat extraction from the exhaust gases in order to warm up the engine coolant, to speed up windshield defrost, and/or heat-up a passenger compartment of the vehicle, for example. Accelerated heat-up of the engine coolant also decreases the time-averaged engine oil viscosity, resulting in lower viscous losses in the moving parts of the engine and reduced fuel consumption. Alternatively, under high speed and/or high load engine operating conditions, it may be desirable to reduce or minimize the thermal extraction from the exhaust gases so that excessive heat does not have to be carried and rejected by the engine/vehicle cooling system.

In some embodiments, the assembly of the present disclosure transfers heat from exhaust gases to additional or alternative vehicle fluids, such as lubricants for an engine, a transmission, an axle, and/or a differential, for example, and/or any other fluid.

Control of the heat extraction can also be employed for other reasons in a vehicle. For example, if the heat extraction system is located upstream of an emissions device such as a catalytic converter or lean NOx trap, then it may be desirable to maintain the temperature of the exhaust gases entering that emissions device within a specific temperature range. The temperature range may depend upon the conversion efficiency of the emissions device and service temperature limits for long life and durability of the device. In this type of application, it may be desirable to reduce or prevent heat extraction from the exhaust gases when the emissions device is below operating temperature so that the emissions device heats up as quickly as possible to an optimal operating temperature. Likewise, it can be desirable to extract heat energy from the exhaust gases, even under conditions of high engine speed and/or load, to keep the operating temperature of an emissions device below an upper operating temperature threshold to prevent damage and/or maintain the efficiency of the emissions device.

In some forms, the present disclosure provides an exhaust gas heat recovery system that may include a housing, a valve member, and a heat exchanger. The housing may include an inlet, an outlet, a first exhaust gas pathway in communication with the inlet and the outlet, and a second exhaust gas pathway in communication with the inlet and the outlet. The valve member may be disposed within the housing and may be movable between a first position and a second position. In the first position, the valve member may allow fluid flow through the first exhaust gas pathway and substantially prevent fluid flow through the second exhaust gas pathway. In the second position, the valve member may allow fluid flow through the second exhaust gas pathway. The heat exchanger may be in communication with the second exhaust gas pathway and may include a conduit having a fluid flowing therein. The fluid may be in thermal communication with exhaust gas in the heat exchanger when the valve member is in the second position and may be substantially thermally isolated from the exhaust gas when the valve member is in the first position. The heat exchanger may be substantially fluidly isolated from the first exhaust gas pathway when the valve member is in the first portion.

In other forms, the present disclosure provides an exhaust gas heat recovery system that may include a housing, a valve member, and a heat exchanger. The housing may include an inlet, an outlet, a first exhaust gas pathway in communication with the inlet and the outlet, and a second exhaust gas pathway in communication with the inlet and the outlet. The valve member may be disposed within the housing and may be movable between a first position allowing fluid flow through the first exhaust gas pathway and a second position allowing fluid flow through the second exhaust gas pathway. The heat exchanger may be in communication with the second exhaust gas pathway and may include a conduit having a fluid flowing therein. The fluid may be in thermal communication with exhaust gas in the heat exchanger when the valve member is in the second position. The housing may include a first stop member contacting a leading end of the valve member when the valve member is in the first position and a second stop member contacting a trailing end of the valve member when the valve member is in the first position. The leading end may contact a surface of the first stop member that faces generally away from the first exhaust gas pathway.

In some embodiments, the first exhaust gas pathway is substantially aligned with the inlet and the outlet to define a substantially linear flow path therethrough. In some embodiments, the valve member at least partially defines a substantially U-shaped flow path through the heat exchanger when the valve member is in the second position, the valve member defining an inlet into the U-shaped flow path and an outlet out of the U-shaped flow path when the valve member is in the second position.

The present disclosure also provides a heat exchanger that operates within such a heat recovery system. The heat exchanger may utilize a U-shaped flow path through which the exhaust gases may flow when the heat recovery system is operating in a heat recovery mode. The construction of the heat exchanger is designed to provide good durability under severe thermal operating conditions while still providing good performance for heat transfer at low pressure drop. In some embodiments, parallel cooling plates of the heat exchanger are arranged in a manner that is perpendicular to an axis about which a rotary valve member rotates. Heat transfer fins may be arranged between the cooling plates to increase heat transfer from the exhaust gases. Cooling plate coolant headers may be located in opposite corners of the heat exchanger along an edge of the cooling plates distal to the valve body. Features may be provided in the cooling plates to uniformly distribute coolant throughout the cooling cavity.

In some embodiments, the heat exchanger is configured for high temperature applications. In such embodiments, cooling plates may be arranged perpendicular to the rotary valve member axis, and one or more surfaces of the cooling plates are textured with heat transfer enhancing geometric features. The coolant headers in these embodiments may be located on or near a centerline of the cooling plates, adjacent to each other and proximate to the valve body to form a distinct U-shaped flow path through which the exhaust gases flow. Features may be provided in the cooling plates to uniformly distribute coolant throughout the cooling cavity.

In some embodiments, a cooling plate arrangement is provided whereby the cooling plates are parallel to the valve plate when the valve plate is in the bypass position. In such embodiments the cooling plates may be contained in an outer shell which may also form the exhaust gas headers on both the inlet and outlet sides of the gas pathway through the heat exchanger.

In some embodiments, the exhaust gas heat recovery system heats two fluid streams from the exhaust gas. In some embodiments, an exhaust gas recirculation (EGR) cooler is combined and/or operate in concert with an exhaust gas heat recovery (EGHR) system. In some embodiments, the exhaust gas heat recovery system includes a gas to gas heat exchanger arrangement.

In some embodiments, an inlet and an outlet of the valve body may be in communication with an exhaust manifold associated with an engine and substantially all of the exhaust gas that flows through the exhaust manifold may flow through the inlet and the outlet.

In another form, the present disclosure provides another system for recovering heat from exhaust gas of an internal combustion engine. The system may include a body, a valve member and a heat exchanger. The body may include an inlet, an outlet, a first exhaust gas pathway in communication with the inlet and the outlet, and a second exhaust gas pathway in communication with the inlet and the outlet. The body may be adapted to receive exhaust gas from the internal combustion engine. The valve member may be disposed within the body and may be movable between a first position allowing fluid flow through the first exhaust gas pathway and restricting fluid flow through the second exhaust gas pathway and a second position allowing fluid flow through the second exhaust gas pathway. The heat exchanger may be in communication with the second exhaust gas pathway and may include first, second, third and fourth cooling plates arranged parallel to each other. The first and second cooling plates may define a first working fluid cavity therebetween. The third and fourth cooling plates may define a second working fluid cavity therebetween. The second and third cooling plates may define a first exhaust passage therebetween. The first cooling plate may define a second exhaust passage that is parallel to the first exhaust passage. The first and second exhaust passages may be in communication with the second exhaust gas pathway.

In some embodiments, the heat exchanger includes a housing in which the first, second, third and fourth cooling plates are disposed. The housing may include a working fluid inlet and a working fluid outlet in fluid communication with the first and second working fluid cavities.

In some embodiments, the first, second, third and fourth cooling plates are arranged parallel to a direction of fluid flow through the first exhaust gas pathway.

In some embodiments, the heat exchanger includes first and second deflector plates disposed within the housing at respective first and second opposing edges of the first, second, third and fourth cooling plates.

In some embodiments, the housing includes a proximal end attached to the body and a distal end opposite the proximal end. The working fluid inlet and the working fluid outlet may be disposed in respective corners of the housing at or near the distal end.

In some embodiments, the first working fluid cavity defines first and second generally U-shaped flow paths extending from the working fluid inlet and providing working fluid to the working fluid outlet, the first U-shaped flow path is disposed within the second U-shaped flow path.

In some embodiments, the heat exchanger includes first and second ribs defining the first generally U-shaped flow path and defining the second generally U-shaped flow path. At least one of the first and second ribs may include leakage openings through which working fluid leaks between the first and second generally U-shaped flow paths.

In some embodiments, the first rib is generally U-shaped and the second rib is generally straight.

In some embodiments, the heat exchanger includes first and second fin packs attached to the second and third cooling plates, respectively, and disposed in the first and second exhaust passages, respectively.

In some embodiments, the housing includes a proximal end attached to the body and a distal end opposite the proximal end. The working fluid inlet and the working fluid outlet may be disposed along a line extending between the distal and proximal ends and guide exhaust gas in a U-shaped path through the heat exchanger.

In some embodiments, each of the first, second and third cooling plates include a plurality of dimples protruding into one of the first and second exhaust passages.

In some embodiments, the system includes a deflector attached to edges of the first, second, third and fourth cooling plates adjacent the body. The deflector may prevent leakage of exhaust gas between the valve member and the edges of the first, second, third and fourth cooling plates when the valve member is in the second position. The valve member may abut the deflector in the second position.

In some embodiments, the heat exchanger includes a deflector plate and a housing in which the cooling plates are disposed. The deflector plate may be disposed within the housing and may include a plurality of slots receiving the cooling plates. Each of the slots may be defined by a corresponding pair of resiliently flexible tabs that grip edges of the cooling plates.

In some embodiments, the tabs may be arranged to increase a grip on the edges of the cooling plates in response to movement of the deflector plate relative to the cooling plates.

In another form, the present disclosure provides another system for recovering heat from exhaust gas of an internal combustion engine. The system may include a body, a valve member and a heat exchanger. The body may include an inlet, an outlet, a first exhaust gas pathway in communication with the inlet and the outlet, and a second exhaust gas pathway in communication with the inlet and the outlet. The body may be adapted to receive exhaust gas from the internal combustion engine. The valve member may be disposed within the body and movable between a first position allowing fluid flow through the first exhaust gas pathway and restricting fluid flow through the second exhaust gas pathway and a second position allowing fluid flow through the second exhaust gas pathway. The heat exchanger may be in communication with the second exhaust gas pathway and may include a plurality of cooling plates arranged parallel to each other and defining an exhaust passage and a working fluid passage. The exhaust passage may define a generally U-shaped flow path therethrough. The working fluid passage may include first and second generally U-shaped flow paths receiving working fluid from a working fluid inlet and providing working fluid to a working fluid outlet. The first U-shaped flow path may be disposed within the second U-shaped flow path. A divider may define the first and second generally U-shaped flow paths and may include leakage openings through which working fluid leaks between the first and second generally U-shaped flow paths.

In some embodiments, the plurality of cooling plates includes first, second, third and fourth cooling plates. The first and second cooling plates may define the working fluid passage therebetween. The third and fourth cooling plates may define another working fluid passage therebetween. The second and third cooling plates may define the exhaust passage therebetween. The first cooling plate may define another exhaust passage.

In some embodiments, the heat exchanger includes another divider that defines the first and second generally U-shaped flow paths and includes leakage openings through which working fluid leaks between the first and second generally U-shaped flow paths.

In some embodiments, one of the dividers is generally U-shaped and the other divider is generally straight.

In some embodiments, the cooling plates are arranged parallel to a direction of fluid flow through the first exhaust gas pathway.

In some embodiments, the heat exchanger includes a housing in which the cooling plates are disposed.

In some embodiments, the heat exchanger includes first and second deflector plates disposed within the housing at respective first and second opposing edges of the cooling plates.

In some embodiments, the housing includes a proximal end attached to the body and a distal end opposite the proximal end. The working fluid inlet and the working fluid outlet may be disposed in respective corners of the housing at or near the distal end.

In some embodiments, the heat exchanger includes a fin pack disposed between adjacent cooling plates and disposed in the exhaust passage.

In some embodiments, the housing includes a proximal end attached to the body and a distal end opposite the proximal end. The working fluid inlet and the working fluid outlet may be disposed along a line extending between the distal and proximal ends and guide exhaust gas in a U-shaped path through the heat exchanger.

In some embodiments, at least one of the cooling plates includes a plurality of dimples protruding into the exhaust passage.

In some embodiments, the system includes a deflector attached to edges of the cooling plates adjacent the body. The deflector may prevent leakage of exhaust gas between the valve member and the edges of the cooling plates when the valve member is in the second position. The valve member may abut the deflector in the second position.

In some embodiments, the heat exchanger includes a deflector plate and a housing in which the cooling plates are disposed. The deflector plate may be disposed within the housing and may include a plurality of slots receiving the cooling plates. Each of the slots may be defined by a corresponding pair of resiliently flexible tabs that grip edges of the cooling plates.

In some embodiments, the tabs may be arranged to increase a grip on the edges of the cooling plates in response to movement of the deflector plate relative to the cooling plates.

In another form, the present disclosure provides another system for recovering heat from exhaust gas of an internal combustion engine. The system may include first and second valve assemblies and a heat exchanger. The first valve assembly may include a first valve body and a first valve member. The first valve body may include a first inlet, a first outlet and a first opening. The first inlet may be configured to receive exhaust gas from the internal combustion engine. The first valve member may be disposed within the first valve body and may be movable relative thereto between a first bypass position and a first heat exchange position. The first valve member restricts fluid communication between the first inlet and the first opening in the first bypass position and allows fluid communication among the first inlet, the first opening and the first outlet in the first heat exchange position. The second valve assembly may include a second valve body and a second valve member. The second valve body may include a second inlet, a second outlet and a second opening. The second inlet may be configured to receive a fluid from a fluid source. The second valve member may be disposed within the second valve body and may be movable relative thereto between a second bypass position and a second heat exchange position. The second valve member restricts fluid communication between the second inlet and the second opening in the second bypass position and allows fluid communication among the second inlet, the second opening and the second outlet in the second heat exchange position. The heat exchanger may be attached to and disposed between the first and second valve bodies and may include an exhaust gas passageway and a fluid passageway. The exhaust gas passageway may be in fluid communication with the first opening and may receive exhaust gas from the first inlet when the first valve member is in the first heat exchange position. The fluid passageway may be in fluid communication with the second opening and may receive fluid from the second inlet when the second valve member is in the second heat exchange position. The fluid passageway may be fluidly isolated from the exhaust gas passageway and may be in a heat transfer relationship with the exhaust gas passageway.

In some embodiments, the heat exchanger includes first and second plates and first and second fin packs. The second fin pack may be disposed between the first and second plates.

In some embodiments, the first plate and the first fin pack may define a first portion of the exhaust gas passageway. The first plate and the second fin pack may define a first portion of the fluid passageway. The second fin pack and the second plate may define a second portion of the exhaust gas passageway.

In some embodiments, the heat exchanger includes an outer housing encasing the first and second plates and the first and second fin packs. The first and second valve bodies may be attached to opposing first and second ends of the outer housing.

In some embodiments, the first valve assembly and the heat exchanger cooperate to define a first U-shaped flow path. The second valve assembly and the heat exchanger may cooperate to define a second U-shaped flow path.

In some embodiments, the first and second U-shaped flow paths are misaligned with each other by one-hundred-eighty degrees.

In some embodiments, the fluid is air and the fluid source is an HVAC duct.

In some embodiments, the fluid is air and the fluid source is an air-induction duct supplying air to the engine.

In another form, the present disclosure provides another system for recovering heat from exhaust gas of an internal combustion engine. The system may include a valve assembly and a heat exchanger. The valve assembly may include a valve body and a valve member. The valve body may include an inlet, an outlet and an opening. The inlet may be configured to receive exhaust gas from the internal combustion engine. The valve member may be disposed within the valve body and movable relative thereto between a bypass position and a heat exchange position. The valve member restricts fluid communication between the inlet and the opening in the bypass position and allows fluid communication among the inlet, the opening and the outlet in the heat exchange position. The heat exchanger may be attached to the valve body and may include an exhaust gas passageway, a first fluid passageway and a second fluid passageway. The first and second fluid passageways may be fluidly isolated from each other and from the exhaust gas passageway. The exhaust gas passageway may be in heat transfer relationships with the first and second fluid passageways.

In another form, the present disclosure provides another system for recovering heat from exhaust gas of an internal combustion engine. The system may include a valve assembly and a heat exchanger. The valve assembly may include a valve body and first and second valve members. The valve body may include an inlet, an outlet, a first volume, a second volume, a first opening and a second opening. The inlet may be configured to receive exhaust gas from the internal combustion engine and supply the exhaust gas to the first and second volumes. The first valve member may be disposed within the first volume and may be movable relative thereto between a first bypass position and a first heat exchange position. The first valve member restricts fluid communication between the first volume and the first opening in the first bypass position and allows fluid communication among the inlet, the first volume, the first opening and the outlet in the first heat exchange position. The second valve member may be disposed within the second volume and may be movable relative thereto independently of the first valve member between a second bypass position and a second heat exchange position. The second valve member restricts fluid communication between the second volume and the second opening in the second bypass position and allows fluid communication among the inlet, the second volume, the second opening and the outlet in the second heat exchange position. The heat exchanger may be attached to the valve body and may include first and second exhaust gas passageways and first and second fluid passageways. The first and second fluid passageways may be fluidly isolated from each other and from the first and second exhaust gas passageways. The first and second exhaust gas passageways may be in heat transfer relationships with the first and second fluid passageways, respectively. The first and second exhaust gas passageways may be substantially thermally isolated from the second and first fluid passageways, respectively.

In some embodiments, the valve body includes an interior dividing wall that separates the first and second volumes.

In another form, the present disclosure provides another system for recovering heat from exhaust gas of an internal combustion engine. The system may include a valve assembly and a heat exchanger. The valve assembly may include a valve body and a valve member. The valve body may include an inlet, an outlet and an opening. The inlet may be configured to receive exhaust gas from the internal combustion engine. The valve member may be disposed within the valve body and may be movable relative thereto between a bypass position and a heat exchange position. The valve member restricts fluid communication between the inlet and the opening in the bypass position and allows fluid communication among the inlet, the opening and the outlet in the heat exchange position. The heat exchanger may be attached to the valve body and may include an exhaust gas passageway and a fluid passageway. The fluid passageway may be fluidly isolated from the exhaust gas passageway. The exhaust gas passageway may be in a heat transfer relationship with the fluid passageway. The exhaust gas passageway may include an inlet and first and second outlets. The inlet may receive exhaust gas from the opening in the valve body. The first outlet may provide exhaust gas to the outlet of the valve body. The second outlet may provide exhaust gas to an exhaust gas recirculation conduit.

In some embodiments, the first outlet of the heat exchanger is disposed at a first end of the heat exchanger and the second outlet of the heat exchanger is disposed at a second end of the heat exchanger opposite the first end.

In some embodiments, the exhaust gas recirculation conduit includes a valve movable between a first position allowing exhaust gas from the exhaust gas passageway to exit the heat exchanger through the second outlet and a second position restricting exhaust gas from the exhaust gas passageway from exiting the heat exchanger through the second outlet.

In some embodiments, the exhaust gas recirculation conduit provides exhaust gas to an induction system of the engine.

In another form, the present disclosure provides another system for recovering heat from exhaust gas of an internal combustion engine. The system may include a valve assembly and a heat exchanger. The valve assembly may include a valve body and a valve member. The valve body may include an inlet, an outlet and an opening. The inlet may be configured to receive exhaust gas from the internal combustion engine. The valve member may be disposed within the valve body and movable relative thereto between a bypass position and a heat exchange position. The valve member restricts fluid communication between the inlet and the opening in the bypass position and allows fluid communication among the inlet, the opening and the outlet in the heat exchange position. The heat exchanger may be attached to the valve body and may include cooling plates defining an exhaust gas passageway and a fluid passageway. The fluid passageway may be fluidly isolated from the exhaust gas passageway. The exhaust gas passageway may be in a heat transfer relationship with the fluid passageway. The heat exchanger may also include a deflector plate and a housing in which the cooling plates are disposed. The deflector plate may be disposed within the housing and may include a plurality of slots receiving the cooling plates. Each of the slots may be defined by a corresponding pair of resiliently flexible tabs that grip edges of the cooling plates.

In some embodiments, the tabs are arranged to increase a grip on the edges of the cooling plates in response to movement of the deflector plate relative to the cooling plates.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.
Figure 1 is a schematic representation of an engine and exhaust system having an exhaust gas heat recovery system according to the principles of the present disclosure;
Figure 2 is a perspective view of an exhaust gas heat recovery system according to the principles of the present disclosure;
Figure 3 is a perspective, partially cross-sectioned view of the exhaust gas heat recovery system of Figure 2 with a heat exchanger core that is decoupled from the heat exchanger cover plates;
Figure 4 is a cross-sectional view of the exhaust heat recovery system of Figure 2 including a valve element shown in a heat exchange position;
Figure 4a is a cross-sectional view of the exhaust heat recovery system of Figure 2 including the valve element in a bypass position;
Figure 5 is a partial perspective view of a fin pack of the exhaust gas heat recovery system of Figure 4;
Figure 6 is a perspective view of a side deflector plate of the exhaust gas heat recovery system of Figures 3 and 4;
Figure 6b is a partial cross-sectional view of the side deflector plate engaging cooling plates of a heat exchanger;
Figure 7a is a front view of a cooling plate with a fin pack;
Figure 7b is an end view of an offset strip fin pack coupled with cooling plates;
Figure 7c is an end view of decoupled saw-tooth fin packs joined to cooling plates;
Figure 7d is an end view of a single decoupled saw-tooth fin pack joined to a single cooling plate;
Figure 8 is a front view of the interior of a coolant cavity to illustrate the flow and distribution of coolant within a coolant cavity;
Figure 9 is a clipped perspective view of a heat exchanger core to illustrate the flow of coolant into the heat exchanger, distributed to each of the coolant cavities, and finally out of the heat exchanger;
Figure 10 is a clipped perspective view of a heat exchanger core that is coupled with the heat exchanger cover plates;
Figure 11 is a perspective view of another exhaust gas heat recovery system wherein the heat exchanger has coolant inlet and outlet tubes near the centerline of the heat exchanger;
Figure 12 is a perspective partially cross-sectioned view of the exhaust gas heat recovery system of Figure 11 with a heat exchanger core that is coupled to the heat exchanger cover plates;
Figure 13 is a perspective view of a top deflector plate that can be incorporated into either of the exhaust gas heat recovery systems of Figures 12 and 3;
Figure 14 is a cross-sectional view of the exhaust heat recovery system of Figure 11 including a valve element shown in a heat exchange position;
Figure 14a is a partial cross-sectional view of the exhaust gas heat recovery system of Figure 14;
Figure 15 is a front view of the interior of a coolant cavity of the embodiment in Figure 12 to illustrate the flow and distribution of coolant within a coolant cavity;
Figure 15a is a cross-sectional view taken along line A-B of Figure 15;
Figure 15b is a cross-sectional view taken along line C-D of Figure 15;
Figure 16 is a clipped perspective view of an alternative heat exchanger core that is decoupled from the heat exchanger cover plates to illustrate the flow of coolant into the heat exchanger, distributed to each of the coolant cavities, and finally out of the heat exchanger;
Figure 17 is a front view of an alternative cooling plate for the heat exchanger core for the embodiment shown in Figure 12;
Figure 17a is a cross-sectional view taken along line A-A of Figure 17;
Figure 18 is a schematic representation of a dual working fluid heat exchanger for an EGHR system;
Figure 19 is a partially cross-sectioned perspective view of the dual working fluid heat exchanger EGHR system of Figure 18;
Figure 20 is a partially cross-sectioned perspective view of another dual working fluid heat exchanger EGHR system;
Figure 21 is a schematic representation of a combined EGHR-EGR system whereby a single heat exchanger can be used for both EGR cooling and exhaust gas heat recovery to transfer heat to other fluid systems in a vehicle;
Figure 22 is a partially cross-sectioned perspective view of the combined EGHR-EGR system of Figure 21, with a closed EGR valve position;
Figure 23 is a cross-sectional perspective view of the combined EGHR-EGR embodiment of Figure 22, shown with an open EGR valve position;
Figure 24 is a cross-sectional view of another combined EGHR-EGR system including an EGR valve in the closed position;
Figure 25 is a schematic representation of another EGHR system that can transfer heat from the engine exhaust system to a second gaseous fluid;
Figure 26 is a schematic representation of another EGHR system that can transfer heat from the engine exhaust system to the intake air of the same engine system;
Figure 27 is a perspective cross-sectional view of an air-to-air heat exchanger EGHR system that can be incorporated into either of the systems shown in Figures 25 and 26;
Figure 27a is a perspective cross-sectional view of the heat exchanger core of an air-to-air heat exchanger;
Figure 27b is a perspective view of a heat exchanger plate of the type described for use in an air-to-air heat exchanger core;
Figure 27c is a close-up, perspective partial view of the heat exchanger plate of Figure 27b;
Figure 27d is an end view of the heat exchanger for an air-to-air heat exchanger;
Figure 27e is a close-up partial view of the heat exchanger in Figure 27d;
Figure 27f is a cross-section through an air-to-air heat exchanger, corresponding to section A-A of Figure 27d;
Figure 27g is a close-up partial view of the heat exchanger view in Figure 27f;
Figure 28 is a perspective view of another heat exchanger and valve body for an EGHR system;
Figure 29 is a perspective view illustrating a heat exchanger core and heat exchanger housing for the EGHR system of Figure 28;
Figure 30 is a perspective view illustrating side deflector plates and cooling plate geometry of the heat exchanger of the EGHR system of Figure 28; and
Figure 31 is a cross-sectional view of the EGHR system of Figure 28 depicting coolant headers and illustrating a manner in which coolant inlet and outlet tubes from the heat exchanger cooperate with coolant conduits in the valve body.

### DETAILED DESCRIPTION

Example embodiments will now be described more fully with reference to the accompanying drawings. It should be understood that throughout the drawings, corresponding reference numerals indicate like or corresponding parts and features. The following description is merely exemplary in nature and is not intended to limit the present disclosure, application, or uses.

Example embodiments are provided so that this disclosure will be thorough, and will fully convey the scope to those who are skilled in the art. Numerous specific details are set forth such as examples of specific components, and devices, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof.

When an element or layer is referred to as being "on," "engaged to," "connected to" or "coupled to" another element or layer, it may be directly on, engaged, connected or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

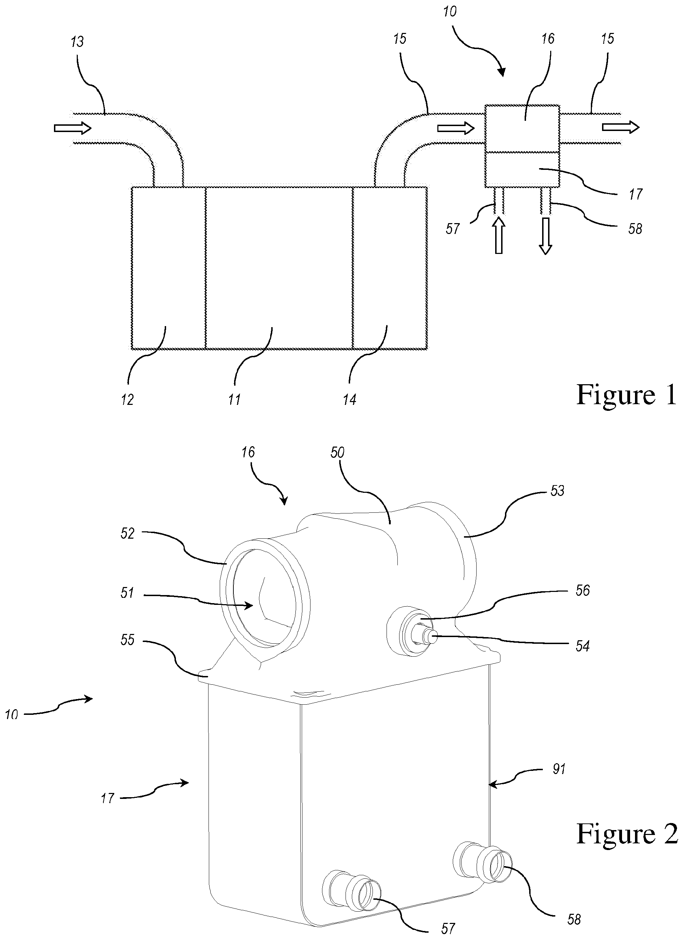

With reference to Figures 1-10, an exhaust gas heat recovery system (EGHR system) 10 is provided and may include a valve assembly 16 and a heat exchanger assembly 17. The EGHR system 10 may be disposed in an exhaust gas flow path of an engine exhaust system 15 at any suitable location between the cylinder head 14 associated with an engine 11 and a tailpipe through which exhaust gas is discharged into ambient air. In some embodiments, the EGHR system 10 may be in direct or indirect fluid communication with a catalytic converter, a NOₓ trap, an exhaust manifold, or turbocharger for example, or any other exhaust system component. The EGHR system 10 may be disposed in a tunnel or channel (not shown) in the underside of a vehicle where the exhaust system 15 may be routed, or closer to the engine 11 in an engine compartment of a vehicle. In some embodiments, the EGHR system 10 may receive substantially all of the exhaust gas discharged from the engine 11 and the cylinder head 14. In other embodiments, an exhaust gas recirculation (EGR) device may be disposed between the engine 11 and the EGHR system 10. In such embodiments, the EGHR system 10 may receive substantially all of the exhaust gas that is not recirculated from the EGR device back to the engine intake charge air system 12 and/or intake air pipe 13. In some embodiments, the EGR device may be disposed downstream of the EGHR system 10. Heat that is recovered from the exhaust gases by the heat exchanger assembly 17 may be transferred to a working fluid, such as an engine coolant, an engine oil, or a transmission oil, for example, or any other lubricant or other fluid in the vehicle. When heat is transferred to the working fluid, the temperature of the working fluid exiting the heat exchanger 17 through an outlet 58 is warmer than the temperature of the working fluid entering the heat exchanger 17 through an inlet 57.

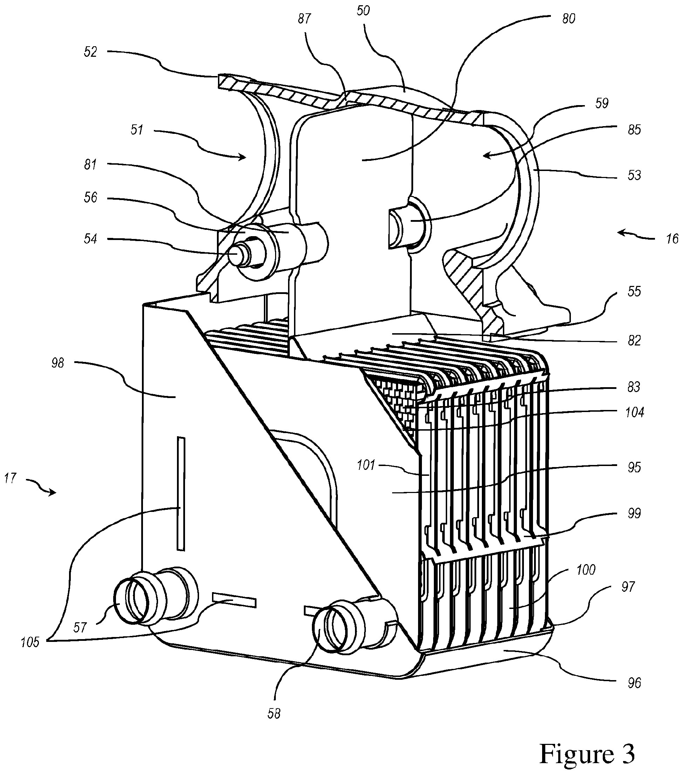

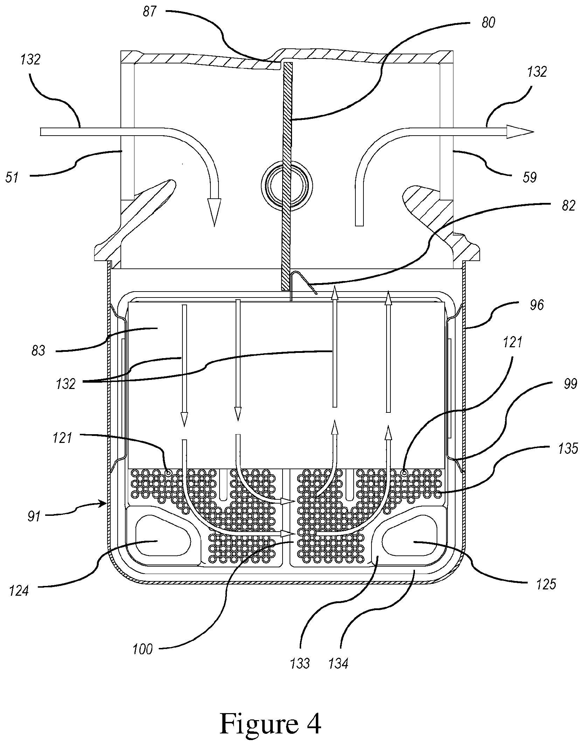

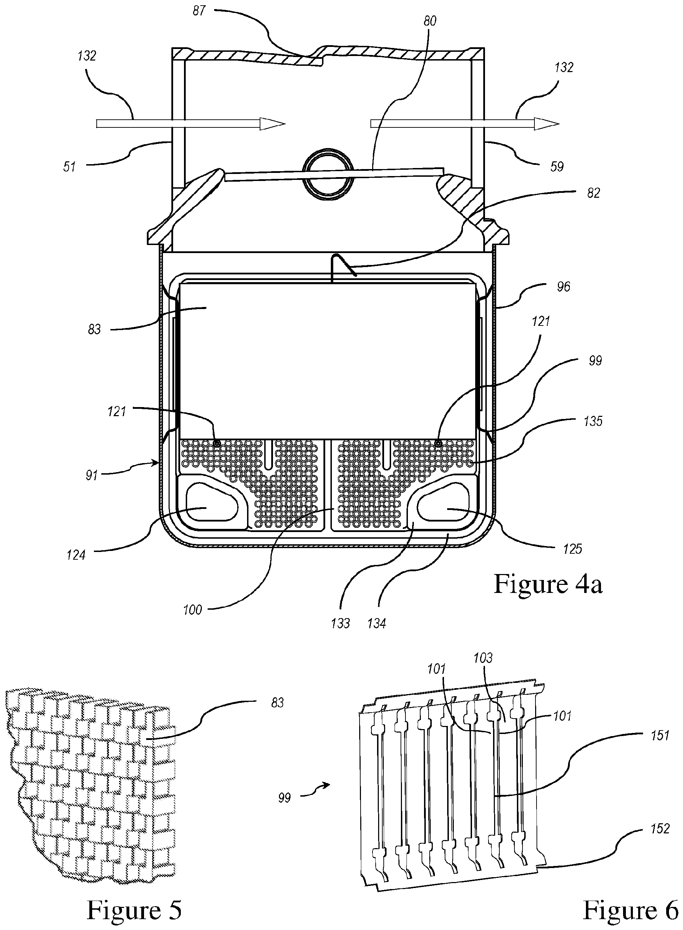

The valve assembly 16 may be of one of the types disclosed in Assignee's commonly owned United States Patent Application Publication No. 2012/0017575, the disclosure of which is hereby incorporated by reference in its entirety. As will be subsequently described, a valve plate 80 of the valve assembly 16 may be movable between a bypass position (Figure 4a) and a heat-exchange position (Figures 3 and 4). In the heat-exchange position, exhaust gas may flow through the heat exchanger assembly 17 and transfer heat to the working fluid. In the bypass position, the exhaust gas may bypass the heat exchanger assembly 17 and exit the EGHR system 10 through an outlet collector 59 without transferring heat (or any significant amount of heat) between the exhaust gas and the heat exchanger assembly 17. While not specifically shown, the valve plate 80 can be positioned anywhere between the bypass position and the heat-exchange position to allow a first portion of the exhaust gas entering the EGHR system 10 to bypass the heat exchanger assembly 17 and a second portion of the exhaust gas to flow through the heat exchanger assembly 17. In this manner, the EGHR system 10 can adjust and optimize an amount of heat transfer between the exhaust gas and the fluid in the heat exchanger assembly 17.

The valve assembly 16 may include a valve body 50, a main valve shaft 54, and the valve plate or diverter plate 80. The valve body 50 may house the main valve shaft 54 and diverter plate 80 and may be shaped so as to control and regulate the exhaust gas flow through the valve body 50 and heat exchange flow paths. The valve body 50 may include an inlet 51, an outlet 59, and one or more openings for fluid communication with the heat exchanger assembly 17.

The valve assembly 16 may be attached to the exhaust system by an inlet flange 52 and an outlet flange 53. The connection with the exhaust system may be by bolted flange, welded connection, or otherwise coupled. Similarly, the valve assembly 16 may be attached to the heat exchanger assembly 17 by welded interface (shown) or otherwise bolted or coupled, with or without a gasket. In this embodiment, the valve body 50 has a flange 55 for coupling with the heat exchanger assembly 17. The welded coupling provides the advantage of a leak-free seal, while the gasketed version of the coupling helps to reduce conductive heat transfer, especially if the gasket contains an insulating material. Coolant enters the heat exchanger assembly 17 through a working fluid inlet tube 57 and exits through a working fluid exit tube 58. In some operating environments it may be desirable to reverse the flow of working fluid through the heat exchanger assembly, depending on the construction of the heat exchanger assembly and the desired operating conditions of the heat exchanger (parallel flow or counter flow operation).

The position of the valve plate 80 may regulate exhaust gas flow through the EGHR system 10 downstream of the valve body inlet 51. The valve plate 80 may be a "butterfly" type (e.g., extending in both directions from axis of the main valve shaft 54) but the valve plate 80 may also be a "flap" type, extending in only one direction from the axis of the main valve shaft 54. The valve plate 80 is may be supported by a main shaft 54 on one side and a stub shaft 85 on the other. The valve plate 80 may also be cantilevered from a single end, the main valve shaft 54. The main valve shaft 54 and stub shaft 85 are supported by a bushing 81 or bearing surface, in cooperation with the valve housing 50. The choice of bushing and/or bearing material may depend on the application temperature and the material of the valve shaft(s) and valve body 50. An actuator (not shown) may rotate the main valve shaft 54 to move the valve plate 80 between the bypass and heat-exchange positions. Motion of the actuator may be controlled by a control module and may transferred to the main valve shaft 54 by means of an actuator arm, linkage, or any other suitable mechanism (not shown). The main valve shaft 54 is externally retained in axial position by a retaining washer 56.

During operation of the EGHR system 10, the exhaust gases enter into the valve body 50 and are directed into the bypass conduit and/or the heat exchanger assembly 17, depending on the position of the valve plate 80. Valve plate stop or seat features 87 may be formed into the valve body 50 to reduce or prevent unwanted leakage between the valve body 50 and the valve plate 80 when the valve plate 80 is in the heat-exchange position. The seat feature 87 for the valve plate 80 also provides a positive stop to limit the rotation of the valve plate 80 about the axis of the main valve shaft 54. This may allow some embodiments to employ a simple actuator without position control (or without fine position control). For example, in applications that do not require modulation of the position of the valve plate 80, a low-cost two-position actuator may be used.

The heat exchanger assembly 17 may include a plurality of coolant plates 100 that are perpendicular to a rotational axis of the main valve shaft 54 and substantially parallel to the bypass flow path between the valve body inlet 51 and the valve body outlet 59. This configuration may help to minimize back pressure through the EGHR system 10 when operating in heat exchange mode. A heat exchanger core may include a stack of interior cooling plates 100, along with a heat exchanger front coolant plate 95 and a heat exchanger back coolant plate. The front coolant plate 95 and the back coolant plate may or may not be identical to the interior cooling plates 100. The cooling plates are arranged such that there is a coolant cavity 104 (Figure 3) between the cooling plates. The working fluid is circulated in this cavity 104 between the cooling plates. Exhaust gas is circulated outside of the cooling plate cavities and heat transfer occurs between the exhaust gas and the working fluid. The working fluid cavity 104 is sealed from direct contact with the exhaust gas. The working fluid cavity 104 from one cooling plate pair is fluidly connected to the working fluid cavity 104 in an adjacent cooling plate pair through a working fluid inlet header 124 and a working fluid outlet header 125. The working fluid inlet header 124 is connected to the working fluid supply via the coolant inlet tube 57, and similarly, the working fluid outlet header is connected to the working fluid return system via the coolant outlet tube 58. The cooling plate subassembly or heat exchanger core is contained within a heat exchanger housing 91. The heat exchanger housing 91 may include a series of cover plates that form a sealed enclosure for the cooling plate subassembly when coupled with the valve body 50. Specifically, the heat exchanger housing 91 may include a front cover plate 98, a back cover plate 97, and a side cover plate 96. In the embodiment shown, the heat exchanger housing 91 is welded to valve body flange 55.

In one embodiment of the heat exchanger assembly 17, the first cooling cavity 104 may be formed between the front coolant plate 95 and the adjacent interior cooling plate 100. Similarly, the last cooling cavity in the heat exchanger core is formed between the back coolant plate and its adjacent interior cooling plate 100. The sub-assembly of cooling plates is held within the heat exchanger housing 91 by welded or brazed coupling around the cooling inlet and outlet tubes, 57 and 58, respectively, and at other coupling zones 105 where the front cover plate 98 is coupled with the front cooling plate 95 and similarly the back cover plate is coupled with the back cooling plate. The placement of the coupling zones 105 are selected to be in relatively cooler areas of the heat exchanger and located to allow differential movement between the heat exchanger core and the front and rear cover plates without inducing stresses between the heat exchanger housing and the heat exchanger core. This method of having selective coupling between the heat exchanger housing and the front and back cooling plates was found to have the least thermal durability issues when fin packs 83 are used in the exhaust gas passageways between the cooling plates to enhance heat transfer from the exhaust gases.

A side deflector plate 99 is used on both sides of the heat exchanger between the heat exchanger side cover plate 96 and the cooling plates 100, primarily in the region adjacent to the fin packs 83. The function of the side deflector plate 99 is to prevent exhaust gases from bypassing the fin packs 83 by filling in the spaces between the edges of the cooling plates 100, and between the edge of the fin pack 83 and the side cover plate 96. The side deflector plates 99 can also serve to locate and hold the cooling plates 100 together during the manufacturing process. A top deflector plate 82 is used on the top side of the cooling plates 100 between the heat exchanger and the valve assembly 16. The top deflector plate 82 prevents unwanted exhaust gas leakage along the top edge of the cooling plates 100 and also provides a stop and sealing surface for the valve plate 80 when in the heat exchange position.

Joining of all the components in the assembly can be achieved either through laser welding, brazing, or a combination of these two methods. It is conceivable that the components could also be joined through any other combination of processes such as soldering, other welding methods, gluing, and similar.

The exhaust gas flow path 132 through the EGHR system (in the heat exchange mode) is illustrated in Figure 4. The exhaust gases enter the valve body inlet 51 and with the valve plate 80 in the heat exchange position, the exhaust gases are directed to the first portion of the heat exchanger core where the fin pack 83 is located. The exhaust gases then travel in the exhaust gas passageways between the coolant plate pairs. Upon exiting the first portion of the heat exchanger fin pack 83, the exhaust gases change direction in a generally U-shaped flow path in the second portion of the heat exchanger core. The exhaust gases then enter the third portion of the heat exchanger core which contains the second portion of the fin pack 83. After the exhaust gases exit the heat exchanger core they enter a second portion of the valve body 50 (i.e., downstream of the valve plate 80) and exit out the valve body outlet 59. The working fluid or coolant is distributed between the cooling plate pairs and within the cooling plate pairs via the coolant inlet header 124 and the coolant outlet header 125. The cooling plates are sealed together along their perimeter in an edge coupling land 134. The pairs of cooling plates are sealed together at the header coupling land 133 to form the coolant distribution header.

Ideally, the fin packs 83 are located in place during assembly with at least one locator protrusion 121 in the cooling plates 100. The locator protrusion 121 extends outward from the cooling cavity into the exhaust gas passageway between the cooling plate pairs. The entire second portion of the heat exchanger cooling plates may or may not be covered with heat transfer enhancing geometric features 135 to increase heat transfer in the regions of the cooling plates not directly adjacent to the fin packs 83. The fin packs 83 can be made of a variety of heat transfer surfaces such as lanced offset strip fin packs (Figure 5) and louvered fin packs (not shown). These two types of fin packs may provide a large amount of heat transfer with minimal exhaust gas pressure drop. The purpose of the fins is to increase the heat transfer surface area for the exhaust gases to transfer heat to the fins, and the fins in turn conduct the heat to the cooling plates and ultimately to the working fluid. The height of the fin packs 83 must correspond closely with the distance between cooling plate pairs (the gap that forms the exhaust gas passageway) to ensure good contact between the cooling plates 100 and the fin packs 83 to provide for good brazing conditions and/or good heat transfer.

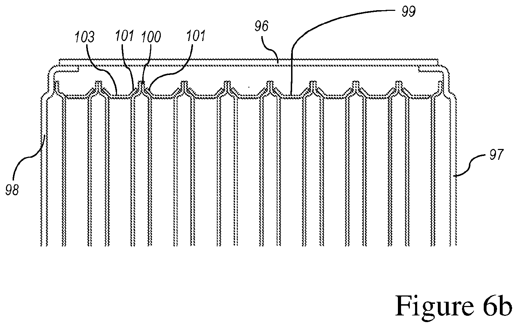

The side deflector plates 99 are used to prevent exhaust gases from bypassing the fin packs 83. The side deflector plates 99 (Figure 6) have slots 151 that receive edges of the cooling plates 100 and effectively seal the gap between the edge of the fin pack 83 and the heat exchanger side cover plate 99. The side deflector plates 99 also have a corner notch 152 to provide a good fit around the side cover plate 96 and the front and back cover plates. The side deflector plates 99 space the cooling plates 100 at regular intervals (Figures 3 and 6b). The side deflector plates 99 are formed in the stamping process such that the slots 151 are defined by spring-like tabs 101 that slide over and grasp the edges of the cooling plates 100 to firmly hold the cooling plates 100 in place.

As shown in Figure 6b, when the side deflector plate 99 is engaged with the cooling plates 100, first and second tabs 101 of each pair of adjacent tabs 101 that cooperate to define each slot 151 are angled such that the first and second tabs 101 extend toward each other as they extend outward from a main body 103 of the side deflector plate 99. When the cooling plates 100 are received in the slots 151, the tabs 101 of each adjacent pair of tabs 101 are spring biased toward each other (i.e., the resilient flexibility of the tabs 101 urges the tabs 101 toward each other in a manner that constricts the slots 151). This configuration of the adjacent tabs 101 causes the tabs 101 to grip the edges of the cooling plates 100 even tighter with any movement of the side deflector plate 99 relative to the cooling plate 100 in the direction (i.e., upward relative to the frame of reference of Figure 6b) that the side deflector plate 99 must move in order to remove the side deflector plate 99 from the cooling plate 100. Therefore, once the side deflector plates 99 are assembled onto the cooling plates 100, the side deflector plates 99 are very difficult to remove because of the retaining force of the tabs 101 that grip the cooling plates 100 with increased force as forces to remove the side deflector plates 99 increase.

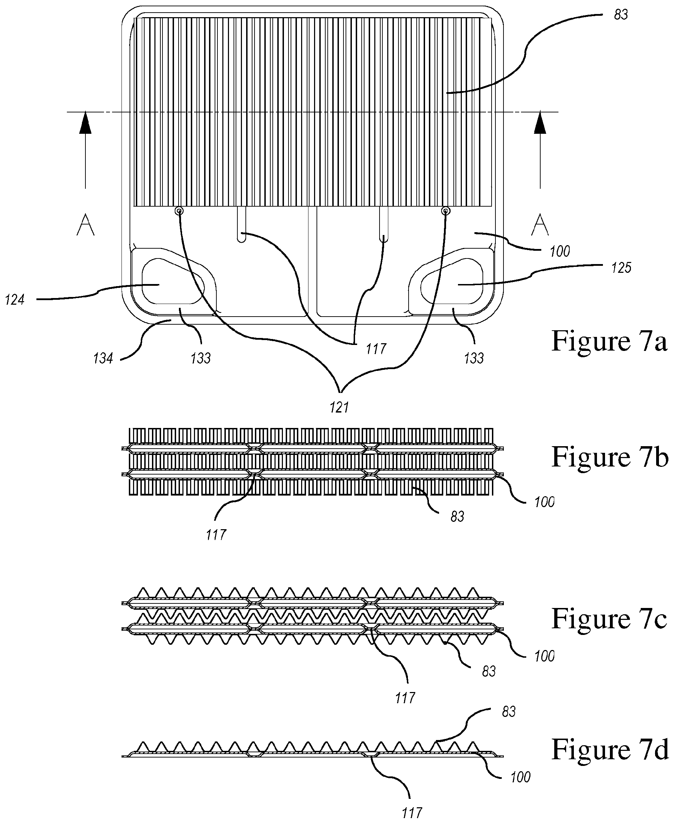

In Figures 7a through 7d, it can be seen how the cooling plates 100 cooperate to form a coolant channel. The cooling plates 100 are sealed around their perimeter at the edge coupling land 134 to form cooling plate pairs. The cooling plate pairs are joined around the coolant inlet header 124 and the coolant outlet header 125 at the header coupling land 133. The fin packs 83 are located between the plate pairs. The fin packs 83 can traverse the entire gap between the cooling plates 100 as in Figure 7b. This may be referred to as a coupled fin pack, because each fin pack 83 is in thermal contact with two cooling plates 100 in different cooling plate pairs. With coupled fin packs, it is may be desirable to ensure good thermal contact between the cooling plates 100 and the fin packs 83 by brazing the fin packs 83 to the cooling plates 100.

An alternative fin structure, such as that shown in Figure 7c is a decoupled fin pack. In this embodiment, each cooling plate 100 is in thermal contact with a single fin pack 83. When assembled in the heat exchanger core, the decoupled fin packs operate much like the coupled fin packs for heat transfer. The potential advantage of decoupled fin packs is that they can be welded, brazed, or otherwise joined to the cooling plates 100 in a separate manufacturing operation prior to the assembly of the heat exchange core. This is desirable in the case of welding the entire heat exchanger, without the need for brazing in the manufacturing process. For clarity, Figure 7d illustrates the decoupled nature of a single cooling plate 100 attached to a fin pack 83. When the cooling plates with attached fins of Figure 7d are assembled together, the heat exchanger core of Figure 7c is formed. Note also in Figures 7a-7d the cooling plate ribs or diverter features 117. The cooling plate diverter features 117 adjacent to each other in a coolant plate pair cooperate with each other to control and direct the flow path of the working fluid or coolant within the cooling cavities.

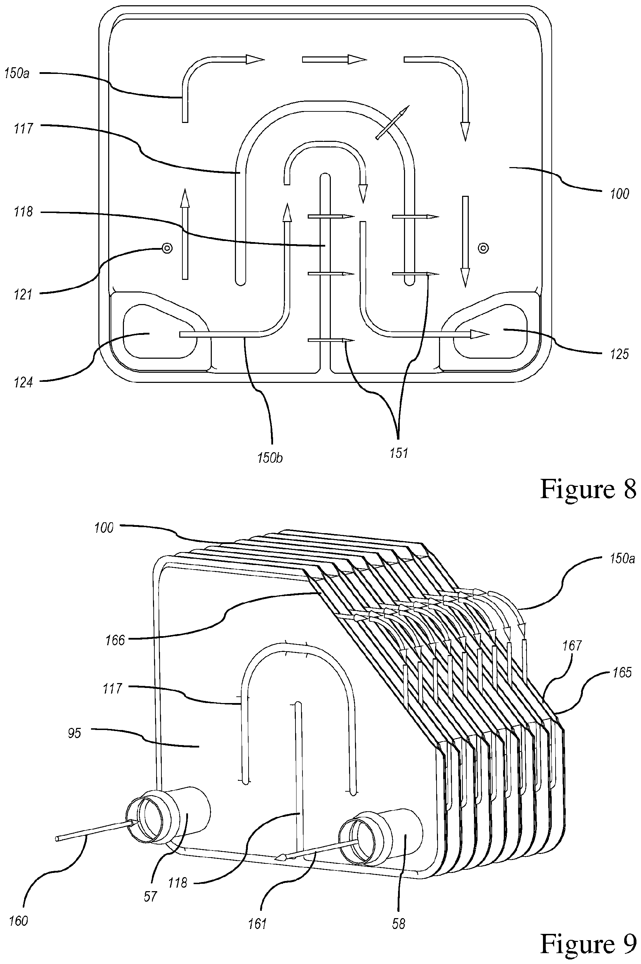

The flow path of the working fluid or coolant through the cooling cavity between cooling plates 100 is shown in Figure 8. Coolant entering the cooling cavity from the coolant inlet header 124 is split into two coolant flow paths: a first outer U-shaped flow path 150a along the three perimeter edges of the coolant cavity (i.e., outside of the U-shaped diverter features 117); and a second, interior U-shaped flow path 150b between the diverter feature 117 and generally linear diverter features 118. Coolant from both flow paths is collected at the coolant outlet header opening 125. The specific size and placement of the diverter feature 117 and the diverter feature 118 have been calculated using computational fluid dynamics simulation software. These features were chosen to provide a uniform distribution of coolant across the entire cooling plate 100 surface. In some areas the diverter features 117, 118 on mating cooling plates cooperate to prevent coolant flow between the diverter features 117, 118. In other areas, the diverter features on mating cooling plates allow a controlled amount of coolant redistribution flow 151 between or across them. This controlled redistribution flow 151 across the diverter features prevents regions of recirculation and stagnation in the coolant cavity, especially on the downstream side of the diverter features 117 and 118. For clarity, Figure 8 depicts the distribution and flow path of coolant within a cooling cavity between two cooling plates 100 of a cooling plate pair, whereas Figure 9 illustrates the distribution of coolant throughout the cooling plate pairs of the entire heat exchanger core. Furthermore, Figure 9 helps to explain the coolant or working fluid inlet flow 160 and outlet flow 161, as well as in the outer U flow path 150a. In this view the front cooling plate 95 can be seen to form one side of the first cooling cavity 166 and the back cooling plate 165 can be seen to form one side of the last cooling cavity 167.

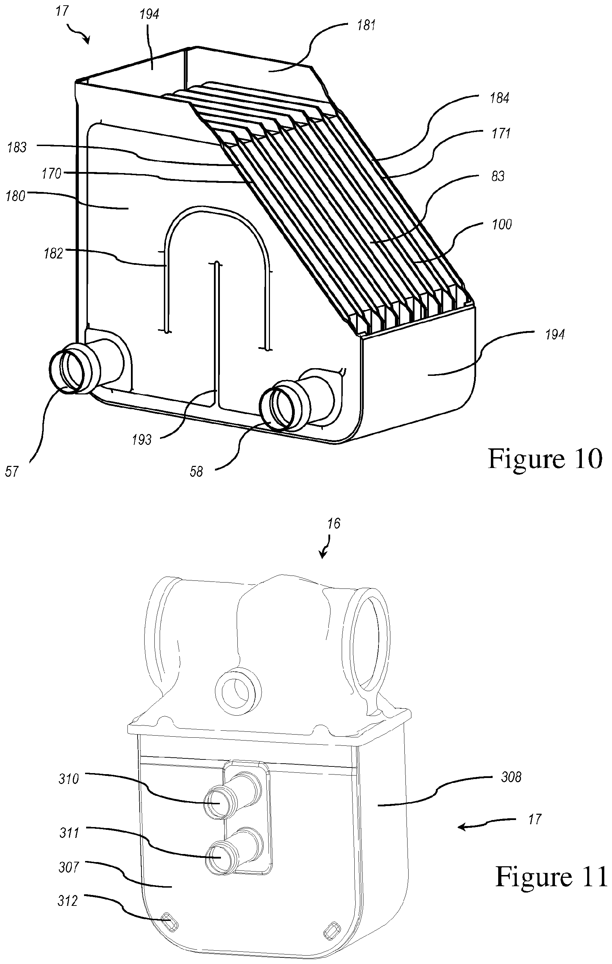

Figure 10 represents an additional embodiment of the heat exchanger assembly 17 of Figure 1. In this case the first coolant plate 170 is fully coupled with the front cover plate 180 of the heat exchanger, and the last coolant plate 171 is fully coupled with the back cover plate 181 of the heat exchanger. In other words, a coolant cavity is formed between each of the front and back cover plates and the adjacent interior cooling plates 100. To be explicit, the first coolant cavity 183 is formed between the front cover plate 180 and the first interior coolant plate 170, and the last coolant cavity 184 is formed between the back cover plate 181 and the last interior coolant plate 171. The side cover plate 194 couples with the front cover plate 180 and the back cover plate 181 to enclose the heat exchanger core and contain the exhaust gases within the heat exchanger. A U-shaped diverter rib 182 and a linear diverter rib 193 are also formed in both the front cover plate 180 and the back cover plate 181. Although this embodiment may have advantages in terms of weight and cost for a given heat exchanger core volume, the thermally induced strains may be higher than the decoupled core design of Figure 3 for some applications.

The areas where the coolant diverter features from one cooling plate touch the coolant diverter features on its mating cooling plate serve to reinforce the structure of the heat exchanger core and prevent collapsing of the cooling cavity in the event of an overpressure situation on the exhaust gas side or an under-pressure situation on the cooling cavity side. Similarly, features such as the coolant header lands 133, the fin packs 83, and the fin pack locator protrusions 121 may cooperate between cooling plate pairs to prevent the cooling plates 100 from buckling due to situations where the coolant pressure is higher than the exhaust gas pressure.

Another series of heat exchanger embodiments for an EGHR system are disclosed in Figures 11-17. In the embodiment of the heat exchanger assembly 17 depicted in Figure 11 the coolant inlet tube 310 and coolant outlet tube 311 and coolant headers are at the centerline of the heat exchanger. The coolant inlet header is proximate the valve body assembly 16 to direct the coolest working fluid to the regions of the heat exchanger coolant cavities which experience contact with the hottest exhaust gases as they enter the heat exchanger core. The heat exchanger front cover plate 307 and back cover plate attach to the side cover plate 308. The front cover plate 307 may also have relief features 312 to accommodate cooling plate features. The features of the present valve body assembly 16 are similar to those of the valve body assembly of Figure 3, and like features are not described again.

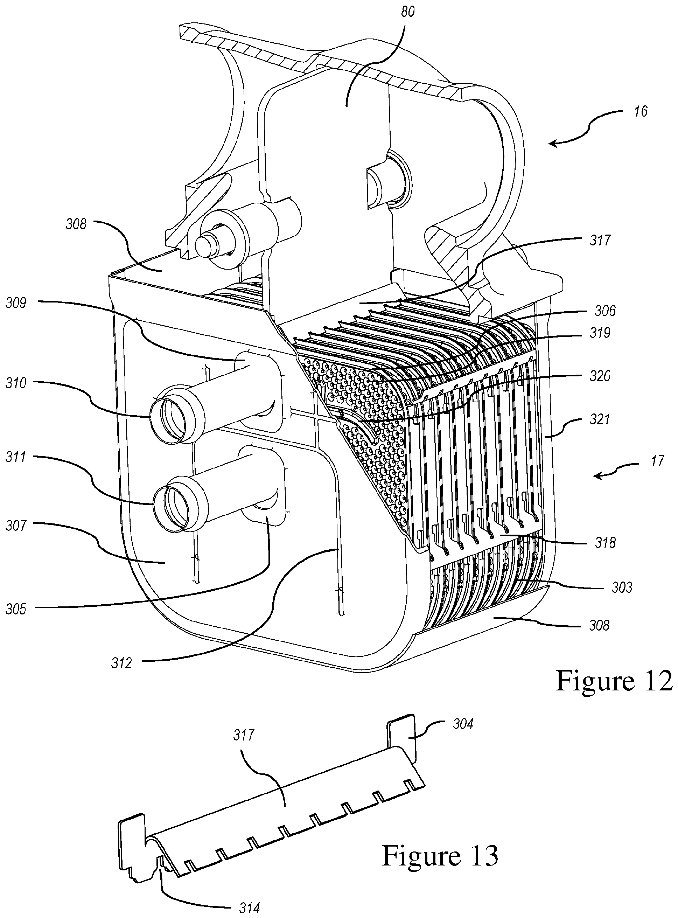

In the heat exchanger 17 embodiment shown in Figure 12, there are no fin packs between the cooling plate pairs. Instead, the cooling plates have a series of geometric features that work to enhance heat transfer when compared to a flat cooling plate. In the first finless heat exchanger embodiment, it was found that a dimple 319 height of approximately 1 mm and a dimple diameter of approximately 2 mm gave good heat transfer with modest backpressure while still being easily stamped into a cooling plate 306 during the manufacturing process. Compared to the heat exchanger identified by the embodiment shown in Figure 3, the present embodiment has an extra pair of cooling plates 303 added to make up for the lower heat transfer to a single cooling plate without a fin pack compared to a finned heat transfer surface. As well, the general spacing between cooling plates 303 for the exhaust gas passageway was reduced from approximately 5 mm for a finned heat exchanger to approximately 4 mm between cooling plates 303 for the finless heat exchanger of the present embodiment. Cooling plates 303 are may be 0.5 mm thick and the cover plates (front cover plate 307, side cover plate 308, and back cover plate 321) may be approximately 1 mm thick. There is a tradeoff between pressure drop and heat transfer when designing the cooling cavity separation distance. The cooling plate cavity height is nominally between approximately 2 and 3 mm. If the cooling cavities have too much distance between cooling plates 303, the coolant velocity is lowered and pressure drop is reduced, but heat transfer is adversely affected. The heat exchanger of Figure 3 utilizes fin packs made from approximately 0.25 to 0.4 mm thickness. The heat exchanger materials may be stainless steel or any other material suitable for providing good durability and long life in the exhaust environment which can have high temperatures and rapid temperature changes as well as requirements to resist oxidation and corrosion. For example, 304L stainless steel can be used for many applications, and grades of 309 and 319 stainless steel can be considered for more severe applications.

Figure 12 also depicts an embodiment for the finless heat exchanger in which the front cover plate 307 is directly sealed with the first (or front) coolant plate 306 to form the first coolant cavity. This coupled nature of the cover plate and the adjacent cooling plate was found to have the lowest thermal stresses and therefore have the best thermal durability for the finless heat exchanger. The front and back cover plates 307, 321, may include the coolant diversion ribs 312 stamped therein to cooperate with the adjacent cooling plate coolant diversion ribs 320 that they are coupled with in order to control the distribution of coolant within the coolant cavity. Coolant enters the heat exchanger assembly 17 through the coolant inlet tube 310 and is distributed to each cooling cavity via the coolant inlet header 309. Coolant from each cooling cavity is collected in the coolant outlet header 305 and the coolant exits the heat exchanger assembly through the coolant outlet tube 311.

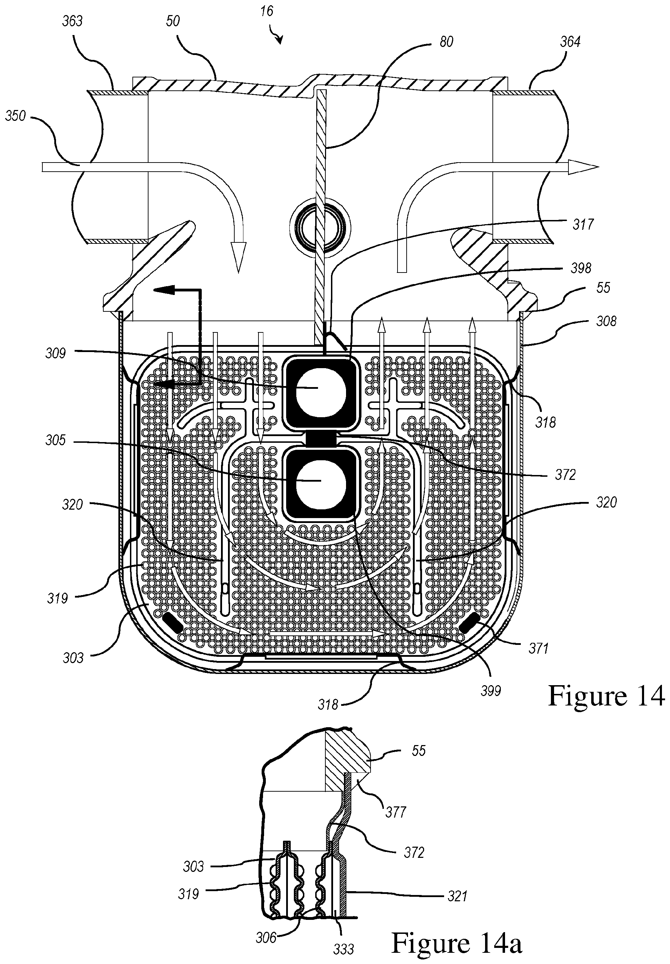

The interior cooling plates 303 are located during assembly with the side deflector plates 318. The side deflector plates 318 prevent the exhaust gases from bypassing the heat transfer surfaces by filling in the gap around the cooling plate 303 edges near the side cover plate 308. As seen in Figure 14, side deflector plates can be used on all three sides of the cooling plates 303 that are adjacent to the side cover plate 308.

The top deflector plate 317 performs the same function in the present embodiment as the embodiment shown in Figure 3. Figure 13 better illustrates the notches 314 that fit over the edges of the coolant plates 303 to block the flow of exhaust gases from short circuiting the heat exchanger from valve assembly inlet to outlet without passing through the heat exchanger. The top deflector plate 317 may also include side blocker tabs 304 to cooperate with the valve plate 80 to block the flow of exhaust gas in the region near the front and rear cover plates, between the valve body and the top edges of the cooling plates 303.

In Figure 14 it can be seen that the central location for the coolant tubes and headers makes for a natural U-shaped flow path for the exhaust gases through the heat exchanger in heat exchange operating mode. The inlet exhaust gas flow path 350 begins with exhaust gas transferred from an upstream exhaust component to exhaust inlet tube 363. In heat exchange mode, the exhaust gases enter a first portion of the valve assembly 16 then turn along the valve plate 80 to enter the heat exchanger. The exhaust gases make one continuous U-turn through the heat exchanger core and exit the heat exchanger into the second portion of the valve assembly 16. The exhaust gas flow path then leaves the valve assembly and the exhaust gases enter the next downstream exhaust component or exhaust outlet tube 364. Figure 14 also illustrates how three side deflector plates 318 can be used to keep the exhaust gases within the main heat transfer surfaces between cooling plates 303 and prevent the gases from circulating in the regions at the cooling plate edges between cooling plate pairs and the side cover plate 308. It should be noted that the side deflector plates 318 of Figure 14 are similar to the side deflector plate shown in Figure 6, except that the notch spacing is adjusted accordingly for the specific cooling plate 303 spacing. Figure 14 also shows the relationship between the valve plate 80, the top deflector plate 317, and the cooling plates 303.

In Figure 14 it can be seen that stand-off features 371 are provided at various locations of the cooling plates to provide a positive separating distance between the cooling plates 303. Also, the plate pairs are sealed at the cooling plate inlet header land 398 and the outlet header land 399. These features hold the plate pairs a fixed distance apart during manufacturing and help to keep the cooling plates from bowing when the pressure on one side of a cooling plate 303 is different from the pressure on the other side of the cooling plate 303. A unique requirement of this embodiment with the inlet coolant header 309 directly adjacent to the outlet coolant header 305 is the need to put a gas flow blocker plug 372 between the coolant inlet header 309 and the coolant outlet header 305. The gas flow blocker plug 372 fills the open gas volume created between the coolant headers due to manufacturing constraints and prevents short circuiting of the exhaust gases through the heat exchanger. The heat transfer enhancement features 319 on the cooling plates 303 are arranged everywhere on the cooling plates possible to maximize heat transfer. Areas of the cooling plates 303 that cannot easily incorporate enhanced heat transfer features 319 include the stand-off features 371, coolant inlet header 309, inlet header land 398, coolant outlet header 305, outlet header land 399, and the coolant diversion ribs 320.

An additional feature which may be found on any of the heat exchanger embodiments disclosed here is the internal heat shield 372 as detailed in Figure 14a. This heat shield 372 is a heat resistant material that is attached along one edge to the heat exchanger cover plates, near the interface between the heat exchanger and the valve body. The heat shield limits the heat transfer from the exhaust gases to the first and last coolant plates, thereby reducing the thermal strains that develop in the first and last coolant plates and the front and back cover plates. The heat shield 372 is not attached to any cooling plate so it is free to expand without undue influence on the cooling plates. Note that the cooling cavity 333 incorporates the back cover plate 321 which helps to cool the back cover plate and improve the durability of the assembly. The heat shield provides a similar function for the front cover plate 307 and the first cooling plate 306, although not shown. Also detailed in Figure 14a is the coupling of the valve body flange 55 with the back cover plate 321. In this embodiment, the cover plates are coupled to the valve body flange 55 with a weld 377.

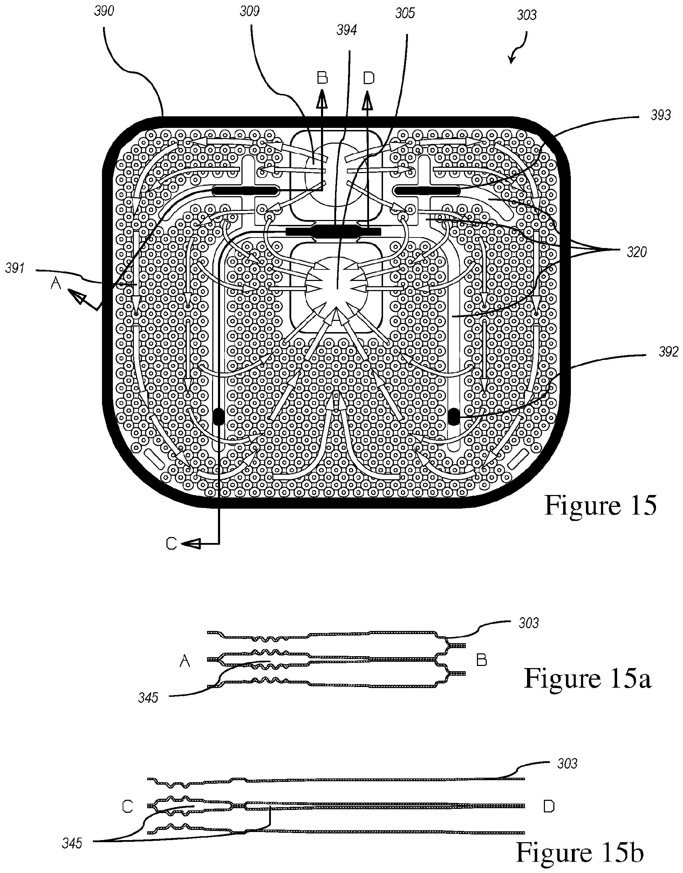

The placement of the coolant inlet and outlet headers adjacent to each other on the centerline of the cooling plate also poses an interesting problem in how to evenly distribute the coolant over the nearly rectangular cooling plate 303 surface. A symmetric system of coolant diversion ribs 320 was developed through a series of computational fluid dynamics simulations as shown in Figure 15. Typically, the coolant inlet header 309 is placed at the top of the heat exchanger cooling plate 303, nearest the valve plate. This ensures that the coolest working fluid or coolant is in contact with the cooling plates along the edge where the exhaust gases first encounter the heat exchanger core. This aids in keeping the heat exchanger cooling plates cool in the zone of highest exhaust gas temperature, minimizes thermal distortion, and extends durability. The coolant diversion ribs 320 were designed with varying height to aid in the even distribution of coolant in the cooling cavities. Figures 15a and 15b show section views through four cooling plates 303 of the heat exchanger core, the middle two cooling plates 303 forming a cooling cavity 345. As seen in Figures 15-15b, the varying height of the coolant diversion ribs effectively blocks and permits controlled amounts of coolant flow in certain regions to redirect the coolant and prevent regions of stagnation and recirculation. This is also illustrated by the general coolant flow path 391 patterns on the coolant plate 303. The coolant diverter ribs 320 allow no leakage coolant paths in the areas of the initial flow straighteners 393 or the coolant header separator stand-off 394. The flow straighteners 393, coolant header separator stand-off 394, and lower cooling plate stand-offs 392 all serve to maintain the cooling cavity at the desired cooling cavity height, even when the cooling plates 303 have a differential pressure between their gas and coolant sides. The cooling plate sealing land 390 is coupled between adjacent cooling plates 303 of a plate pair by welding or brazing to form the peripheral seal for the cooling cavity.

One key feature of all of the heat exchanger embodiments disclosed in Figures 1-17 is that substantially all of the cooling plate surfaces are in contact with the working fluid. Minimizing the un-cooled portions of the cooling plates helps to improve overall durability of the assembled plates and entire heat exchanger.

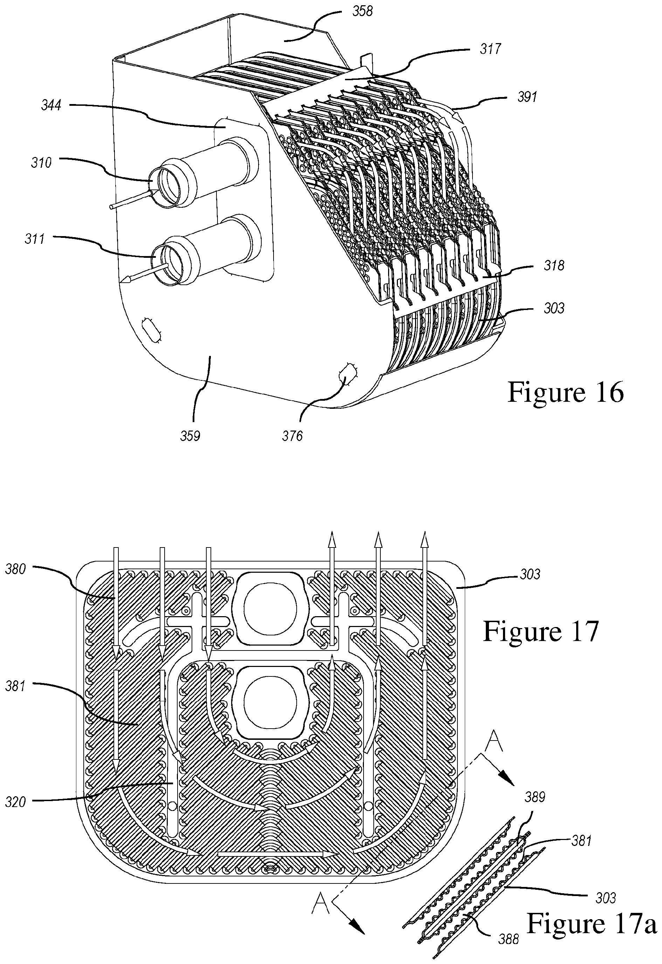

Figure 16 discloses another embodiment of the heat exchanger. In this embodiment, the cooling plate pairs are mostly decoupled from the heat exchanger front cover plate 359 and the back cover plate 358. In other words, there is not a cooling cavity formed between the front or back heat exchanger cover plates and the adjacent cooling plate. The only places the first and last coolant plates are coupled with the front and back cover plates are at the coolant header recess 344 of the cover plates and at the stand-off coupler recess 376 of the coupler plate.

Figure 16 also depicts the general distribution of coolant entering through the coolant inlet tube 310, the flow path of the coolant 391 amongst the cooling cavities of the heat exchanger core, and finally the coolant exiting through the coolant outlet tube 311. The heat exchanger top deflector plate 317 and side deflector plate 318 are also shown. The top deflector plate 317 and side deflector plate 318 are modified as required for this embodiment based on the particular spacing of the cooling plates 303. The notches in the heat exchanger top deflector plate 317 allow it to fit around and between the cooling plate edges to prevent unwanted leakage of exhaust gas between the cooling plate edges when the valve plate is in full heat exchange position. The heat exchanger top deflector plate 317 also provides a positive stop location for the valve plate in full heat exchange position.

Figure 17 discloses yet another embodiment for the cooling plates 303 of the heat exchanger assembly. In this embodiment, a series of ripples or ridges 381 in a herringbone pattern are formed to enhance heat transfer between the exhaust gases in the exhaust gas passageway 388 and the working fluid in the cooling cavity 389. The ripple pattern can be designed to help redistribute the flow of exhaust gases 380 to help negate the misdistribution that occurs due to inertial forces on the exhaust gases as they travel from the valve body through the U-shaped flow path of the heat exchanger, while also inducing higher heat transfer than would be otherwise encountered with a generally flat cooling plate. Such an alternative cooling plate embodiment utilizes similar coolant diverter ribs 320 as shown in the previous embodiment.

The embodiments disclosed in Figures 11-17 could be modified to use industry standard fin packs like that shown in Figure 5 in cooperation with cooling plates with flat sections for coupling with said fin packs. Similarly, any of the embodiments in Figures 2-10 could be utilized without the fin packs, with or without additional heat transfer geometrical surface enhancements. In each of the embodiments shown for a heat exchanger, it should be noted that the first and last coolant plates may or may not be identical to all of the other interior cooling plates.

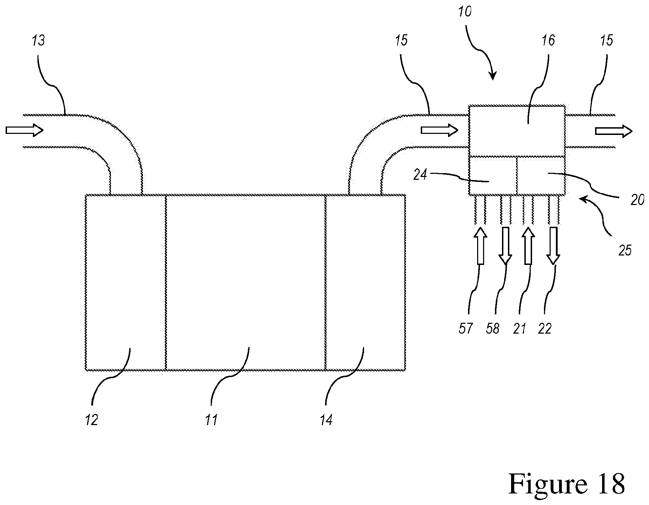

The schematic shown in Figure 18 is a variation of the EGHR system in which two working fluids are used in separate coolant circuits of the EGHR heat exchanger. In some applications, it is desirable to heat two fluids simultaneously instead of heating one working fluid and in turn heating the second working fluid with the first working fluid in a serial manner. An example of this serial heating of working fluids is using the EGHR to transfer heat to the engine coolant, and then using the heated engine coolant to heat the transmission oil. The problem with serial heating of working fluids is that it takes substantially longer to heat the second working fluid than with direct working fluid heating. For maximum fuel economy benefit, it is advantageous to heat the transmission oil at the same time as the engine coolant to provide faster warm up and obtain maximum reduction of viscous friction losses.

Figure 18 illustrates a dual working fluid EGHR system that is attached to an engine system similar to Figure 1. However, in the schematic of Figure 18, the heat exchanger assembly 25 contains a first working fluid conduit 24 with a first working fluid inlet 18 and a first working fluid outlet 19, and a second, separate fluid conduit 20 in the heat exchanger assembly 25 with a working fluid inlet 21 and working fluid outlet 22 for the second working fluid. Like numbered items are the same as in the description of Figure 1 and are not necessarily repeated here.

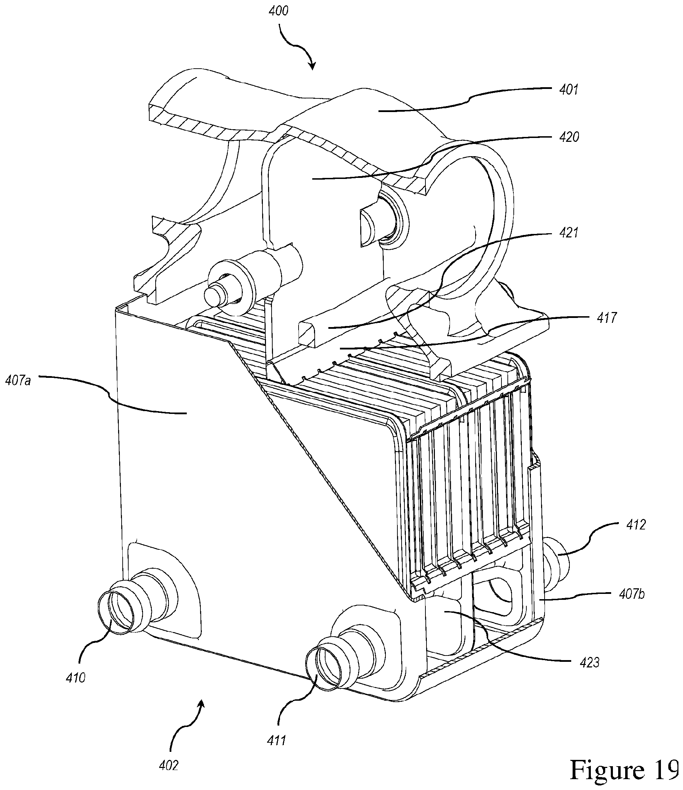

Figure 19 discloses an EGHR embodiment according to the principles illustrated in Figure 18. The present embodiment includes a valve assembly 400 and a heat exchanger assembly 402. The valve assembly 400 contains a valve body 401 with a single valve plate 420 for control of the exhaust gases through the exhaust gas portion of the heat exchanger for both working fluids. Also note the valve body reinforcement rib 421 that spans the valve from front to back to reduce the thermal expansion of the valve body 401 and lessen the thermal stresses on the heat exchanger assembly 402. The valve body reinforcement rib 421 aligns with the top deflector plate 417 to help provide a stop for the valve plate 420 and block the exhaust gas short circuit path when the valve plate 420 is in full heat exchange position as shown. This valve body reinforcement rib 421 could be included in any of the valve body embodiments disclosed herein.

In the heat exchanger assembly 402 of Figure 19, there is a front cover plate 407a with a coolant inlet tube 410 and outlet tube 411 for the first working fluid, and a second front cover plate 407b with a coolant inlet tube and coolant outlet tube 412 on the opposite side of the heat exchanger for the second working fluid. Also, at least one of cooling plates 423 does not have a through hole in the coolant inlet and outlet header. This plate(s) 423 without coolant inlet and outlet header holes effectively separates the first working fluid from the second working fluid. As well, the position of the plate(s) 423 without coolant inlet and outlet header holes in the heat exchanger core determines the relative amount of heat transfer that will be available to each working fluid. For example, if the plate(s) 423 without coolant inlet and outlet header holes is in the middle of the heat exchanger core then each working fluid will receive approximately the same amount of heat from the exhaust gases when the valve assembly is in heat exchange mode. However, if the plate(s) 423 without coolant inlet and outlet header holes is between the third and fourth coolant plate pairs of a nine plate pair heat exchanger, then one working fluid will receive approximately one third of the heat from the exhaust gases and the other fluid will receive approximately two thirds of the heat from the exhaust gases. One issue with this design of dual working fluid EGHR is that there is only one valve system 400 to control the heat transfer to two working fluids. In this case, if one working fluid is at a condition that it cannot accept more heat input the valve system must go into bypass mode, even if the other working fluid requires more thermal input from the exhaust gases.

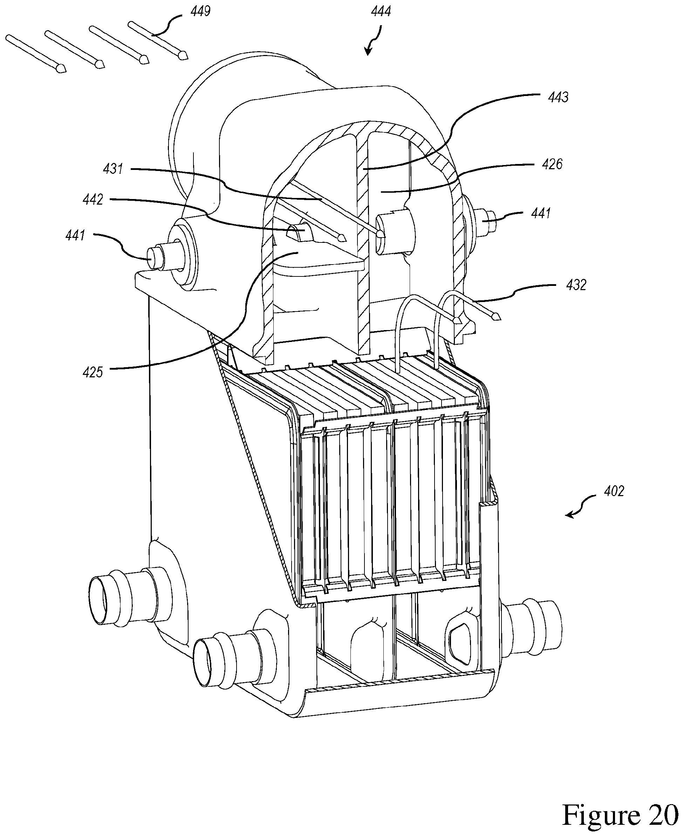

A solution to control the heat transfer to each of the working fluids in a two working fluid EGHR system is shown in Figure 20. In this embodiment, the inlet exhaust gases 449 can be independently controlled to both portions of the heat exchanger assembly 402 with first and second valve plates 425, 426, respectively. This way each working fluid can be heated at an independent time and rate, depending on operating conditions and requirements. In Figure 20, the valve body assembly 444 is shown in the operating mode where the first exhaust gas flow path 431 is completely bypassing the heat exchanger first portion associated with the first working fluid (first valve plate 425 is in the bypass position), and the second exhaust gas flow path 432 is fully engaging the heat exchanger second portion with the second working fluid (second valve plate 426 is in the full heat exchange position). Two control mechanisms (actuators, mechanical couplings or linkages, sensors, and control logic systems) are required for this embodiment to independently control the heat transfer to each of the working fluids.

The valve body assembly of Figure 20 is the same in principle as the valve bodies described above, except the valve body has an interior dividing wall 443 that houses at least one bushing and two stub shafts 442. Note that with this arrangement, two valve plates 425 and 426 are provided along with two main shafts 441.

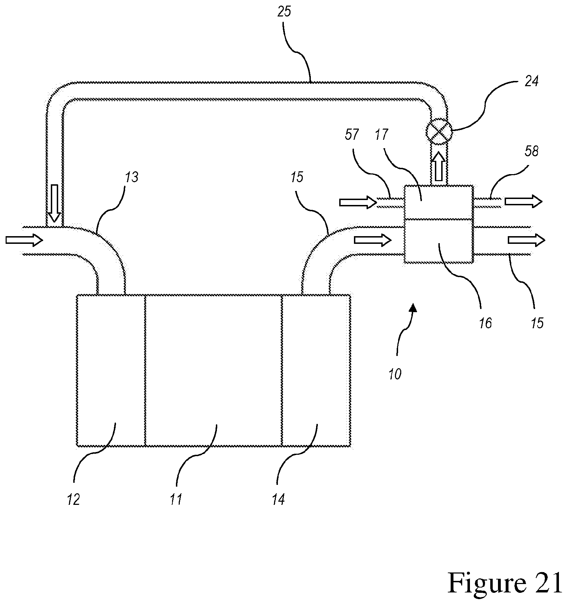

Figure 21 discloses an embodiment where the EGHR system also provides the function of an EGR cooler. Since space in a vehicle is limited, it would be desirable to utilize the EGHR heat exchanger as an EGR cooler as required to avoid separate EGHR and EGR heat exchangers. In this embodiment, exhaust gases leaving the engine through the exhaust system pass into the EGHR system 10. When cooled EGR gas is needed by the engine 11 to feed back into the intake charge air system 12, a separate EGR valve 24 would open to provide cooled exhaust gases through the EGR gas circuit 25. The portion of exhaust gases not entering the EGR gas circuit 25 would be discharged from the EGHR system 10 into the remainder of the exhaust system 15. Description of the other components not mentioned here can be found in the description of like numbered components for the schematic of Figure 1.

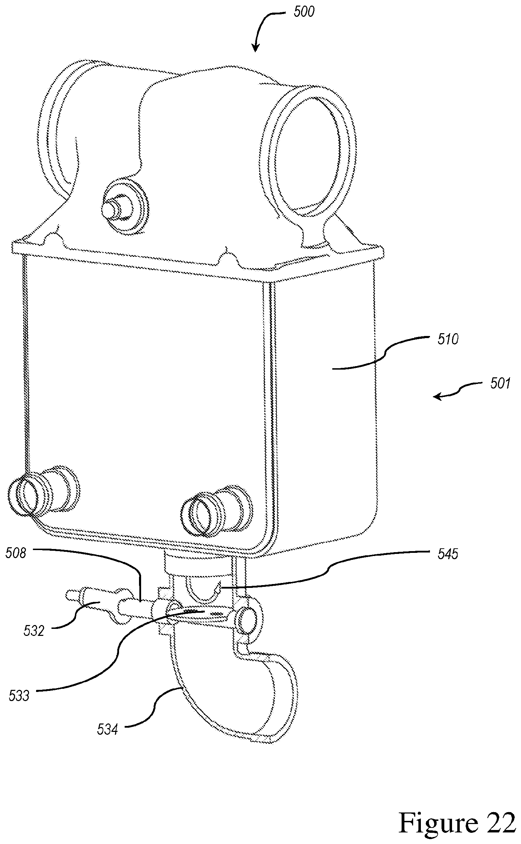

An example of an integrated EGHR-EGR system is shown in Figure 22. The EGHR valve assembly 500 is mated to an EGHR heat exchanger assembly 501. The EGHR heat exchanger assembly 501 can be similar to any of the embodiments disclosed herein, with a modification to the side cover plate 510 to make provision for attaching to the EGR valve assembly and EGR conduit 534. In this view the butterfly style EGR valve plate 533 is shown in the closed position, preventing the flow of exhaust gases 545 into the EGR circuit. The EGR valve plate is mounted on a shaft 508 and its position is controlled by a lever arm 532 that is moved by an actuator (not shown).

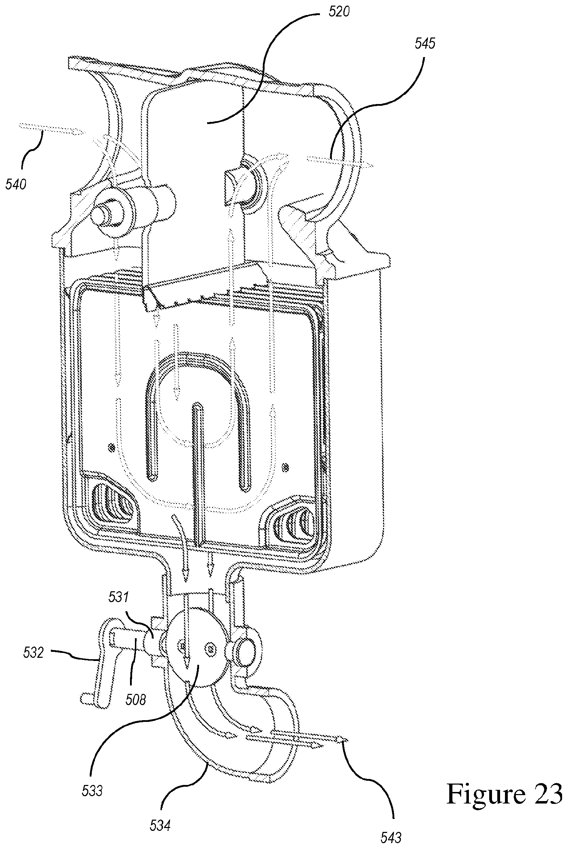

Figure 23 is a section of the same EGHR-EGR system of Figure 22, only in this view the EGR butterfly valve 533 is shown in the fully open position and exhaust gases 543 are flowing through the EGR conduit 534. As seen in Figure 23, when the EGHR valve plate 520 is in the heat exchange mode and the EGR valve 533 is open, there is a split in the flow of inlet exhaust gas 540 between the EGR circuit flow 543 and the EGHR outlet gas flow 545. As EGR flows are typically less than one quarter of the entire exhaust gas flow, the EGR valve plate 533 and conduit 534 sizing is much smaller than the EGHR control valve plate 520 size. The EGR valve system, comprised of an EGR valve plate 533, EGR bushings 531, EGR valve shaft 508, and EGR control arm 532, requires a complete control system (including actuator, motor, or similar) with an integrated control logic that would cooperate with the control system of the EGHR valve to function properly.

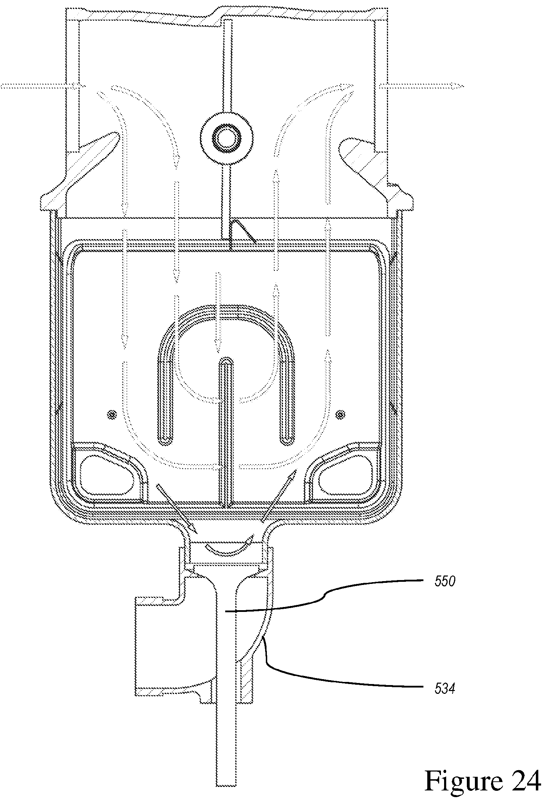

Figure 24 is an alternative EGHR-EGR system embodiment wherein the EGR control valve 550 is of the poppet valve style and is integrated into the EGR conduit 534. The actuation system for the EGR valve is not shown. In Figure 24 the EGR valve is shown in the closed position.

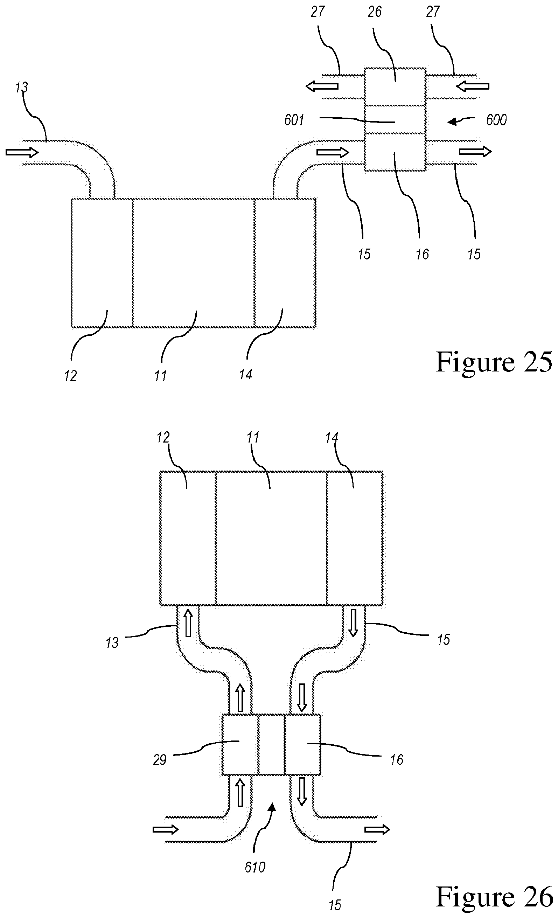

An air-to-air heat exchange schematic is shown in Figure 25. In this case, the exhaust flow from the engine system 11 passes through the EGHR system 600. In the EGHR heat exchanger 601, heat is transferred from the exhaust gases to a second gas media. The second gas media also has a gas control valve assembly 26 that selectively passes the second gas media through the heat exchanger 601 or bypasses the heat exchanger 601 when low pressure drop and/or no additional heat transfer is desired. An example of a second gas media would be the cabin air heating circuit 27 of a vehicle for rapid warm up of the passenger compartment. Since the second gas media is fluidly isolated from the exhaust gases, there would be no contamination of the second gas media by the exhaust gases.

Figure 26 shows another use of the air-to-air EGHR system. In this case, the air-to-air EGHR system 610 is used to heat or control the temperature of the air in the charge air intake system 12. The exhaust gases from the engine system 11 pass through the exhaust component or conduit 15 to the exhaust gas control valve assembly 16 before exiting the EGHR system to the remainder of the exhaust system. When low engine exhaust back pressure or low heat transfer from the exhaust gases is required, the exhaust gas control valve system 16 moves into bypass position. Similarly, when low engine intake pressure drop or low heat transfer to the intake gases is required, the intake gas control valve 29 moves into bypass position. To achieve maximum heat transfer from the exhaust gases, both the exhaust gas control valve 16 and the intake air control valve 29 would be rotated into the full heat exchange position. It would be possible to also modulate the position of either or both gas control valves to an intermediate position when partial heat transfer is desired. Description of the other components not mentioned here for Figures 25 and 26 can be found in the description of like numbered components for the schematic of Figure 1.

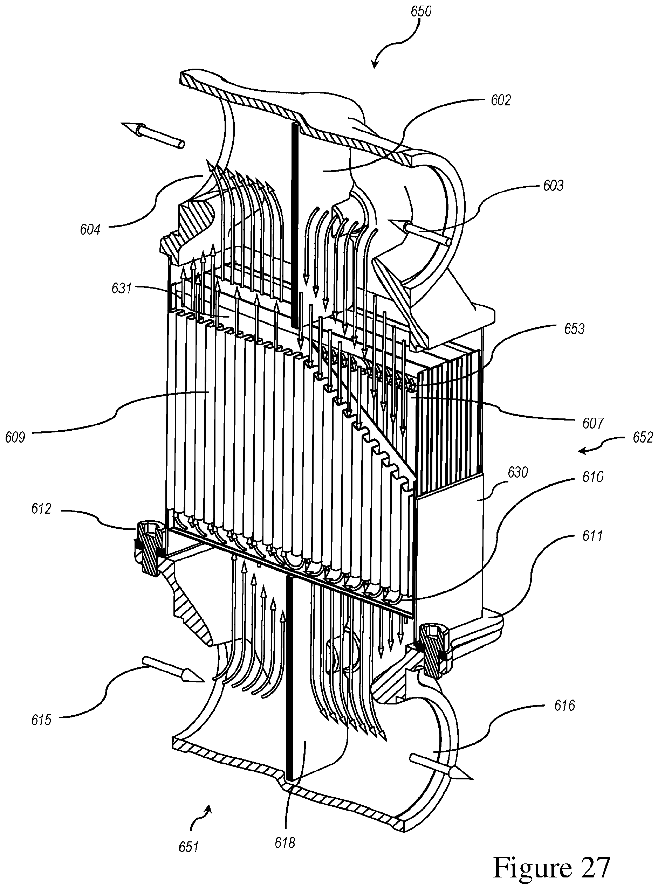

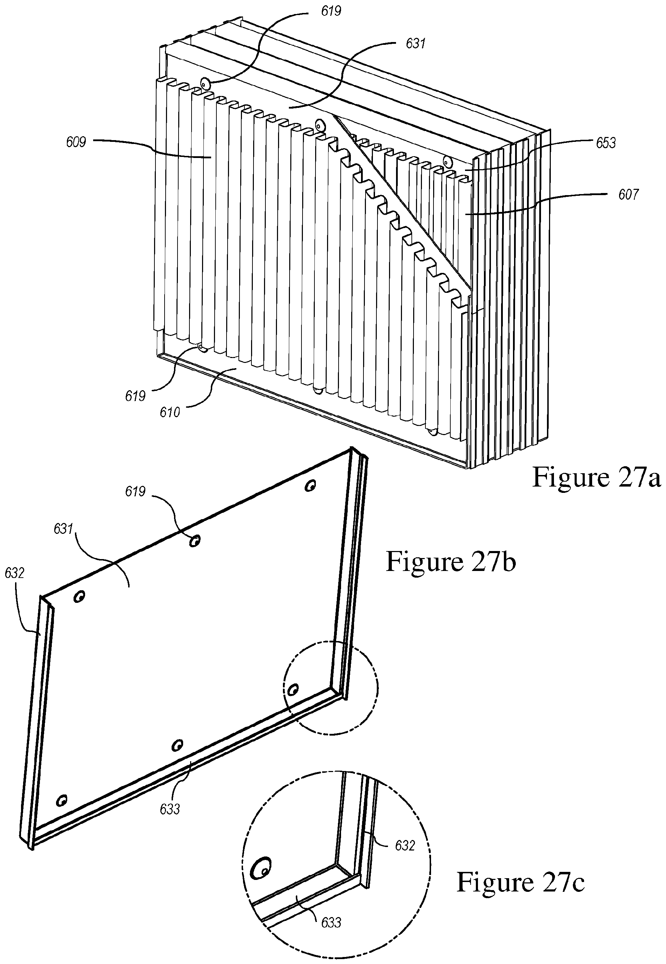

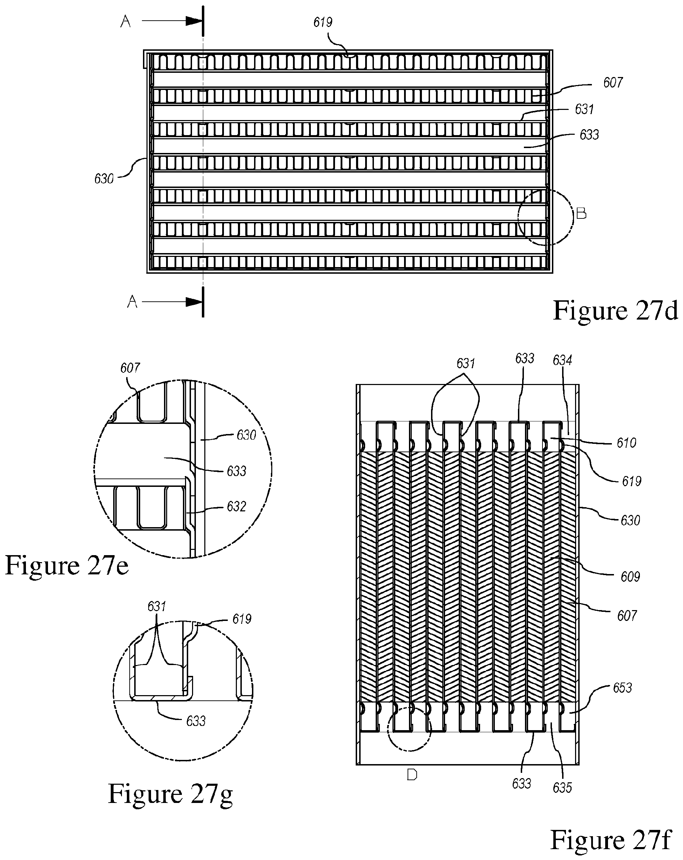

The physical embodiment of the air-to-air EGHR system can be seen in Figure 27 and Figures 27a through 27f. In this cross-section of the disclosure, the first gas control valve plate 602 is in the heat exchange position. The flow of the first gas 603 (e.g. exhaust gas) enters the first gas control valve assembly 650 and turns to enter the first portion of the first gas fluid circuit of the EGHR heat exchanger 652. The first gas then exits the first fin pack portion 609 and enters a first fluid volume 610 between the first and second portions of the first fin pack 609. In the volume 610 between fin pack portions the exhaust gases make a general U-turn to enter the second portion of the first fin pack. After travelling through the second portion of the first fluid fin pack 609, the exhaust gases enter the second portion of the first valve body assembly 650 and exit through the gas outlet portion 604 of the first valve body. Similarly, when the second gas control valve plate 618 is in the heat exchange position, the flow of the second gas 615 (e.g. intake air) enters the second gas control valve assembly 651 and turns to enter the first portion of the second gas fluid circuit of the EGHR heat exchanger. The second gas then travels through the first portion of the second fluid fin pack 607 and enters a second fluid volume 653 between the first and second portions of the second fluid fin pack 607. In the volume between the first and second fin pack portions of the second fluid circuit, the intake air gases make a general U-turn to enter the second portion of the second fluid fin pack 607. After travelling through the second portion of the second fluid fin pack 607, the intake air gases enter the second portion of the second gas valve body assembly 651 and exit through the second gas outlet portion 616 of the second gas valve body assembly.

For ease of construction, one gas control valve assembly 650 is welded to the heat exchanger 652 and the second gas control valve assembly 651 is joined to the heat exchanger with a gasket (not shown) and fasteners 612 at a bolted flange 611. Other combinations of joining the first and second gas control valves to the heat exchanger 652 could be employed. A side cover 630 surrounds the heat exchanger plates 631 and fin packs 609 and 607 to cooperate with the valve assemblies 650 and 651 to enclose both fluid streams. Figure 27a illustrates the locating features 619 in the heat exchanger plates 631 that are used to locate the fin packs 609 and 607 in place prior to brazing.

The heat exchanger plate 631 is shown alone in Figure 27b. In this embodiment, the heat exchanger plate 631 is common throughout the heat exchanger core. When assembling the heat exchanger core, each heat exchanger plate 631 is rotated 180 degrees and stacked upon the previous heat exchanger plate 631. The heat exchanger plate has a side edge 632 and an end side 633. The side edges 632 and end side 633 of a first heat exchanger plate 631 cooperate with an adjacent heat exchanger plate 631 to enclose the fin packs, form the volumes 610 and 653, as well as keep both fluids separate. In other embodiments there are two different heat exchanger plate shapes that are alternately used to build up the heat exchanger core.

For clarity as to the assembly of heat exchanger plates 631 and fin packs 609 and 607, Figure 27d shows the opening 635 for the first fluid to communicate with the first valve assembly 650 and the opening 634 for the second fluid to communicate with the second valve assembly 651. Figure 27d also clearly shows how the first volume 610 is formed between the heat exchanger plates 631, the heat exchanger end side 633, and the first fluid fin pack 609. Similarly, the second volume 653 is formed between the heat exchanger plates 631, the heat exchanger end side 633, and the second fluid fin pack 607.

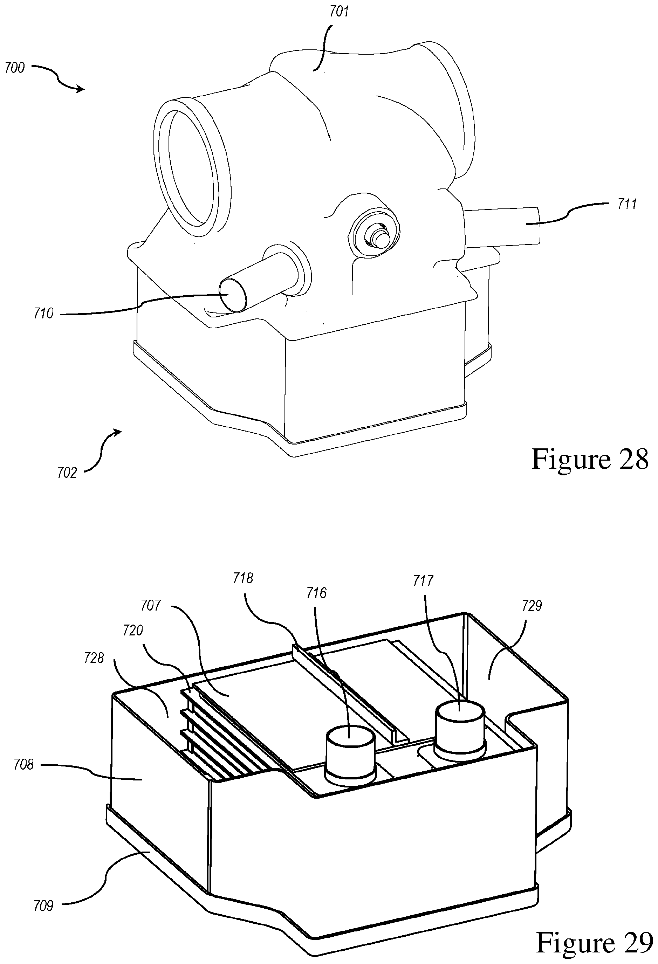

Another EGHR assembly 700 is shown in Figure 28. In this embodiment, the valve body 701 contains the working fluid inlet conduit 710 and the working fluid outlet conduit 711. The heat exchanger assembly 702 is of the parallel plate style.

The heat exchanger assembly of Figure 28 is illustrated in Figure 29. The heat exchanger cooling plates 720 are parallel to the valve plate when the valve is in bypass mode. The heat exchanger coolant inlet tube 716 and coolant outlet tube 717 mate up with respective coolant conduits in the valve body assembly. The heat exchanger core is contained in a heat exchanger housing which is comprised of a side cover plate 708 and a bottom plate 709. The top of the heat exchanger core has a gas leakage prevention plate 707 and a top valve plate stop 718 that cooperates with the valve plate of the valve assembly. The side cover plate 708 forms the inlet exhaust gas header 728 as well as the exhaust gas outlet header 729.

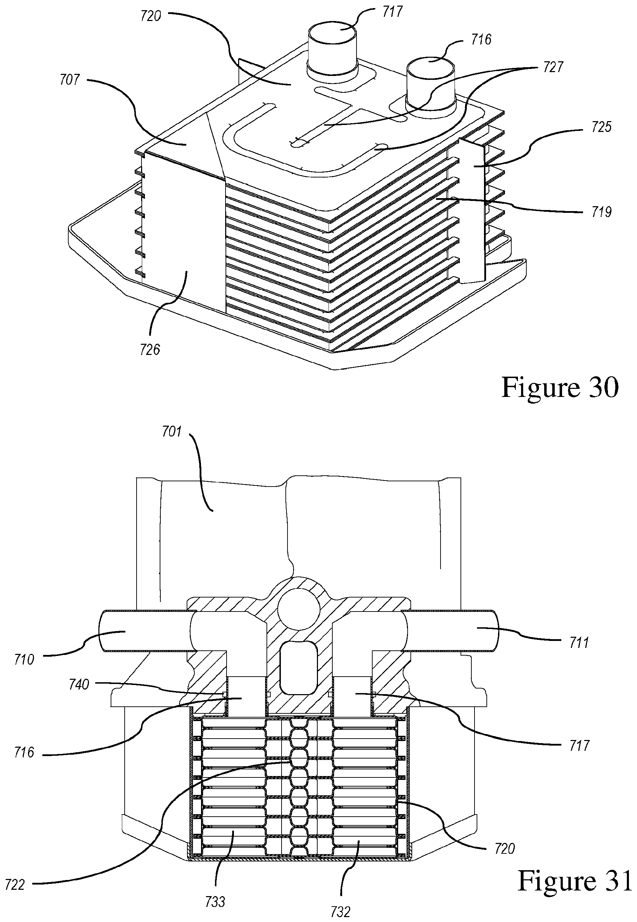

Figure 30 shows the heat exchanger core with a partial section of the gas leakage prevention plate 707 and a partial section of the side leakage prevention plate 726. The coolant header gas leakage prevention plate 725 provides a gas flow restriction to exhaust gases trying to flow around the coolant headers. These three leakage prevention plates fill gaps between the coolant plates 720 and adjacent components through which exhaust gas could bypass the heat exchanger core. Fin packs 719 ensure good heat transfer from the exhaust gases to the cooling plates 720. Coolant diverter ribs 727 help to uniformly distribute the coolant flow over the entire surface of the cooling plates 720 to achieve good heat transfer and avoid hot spots and durability issues in the heat exchanger core. Coolant enters the heat exchanger core through a coolant inlet tube 716 and exits through a coolant outlet tube 717.

Figure 31 illustrates how the coolant inlet conduit 710 and the coolant outlet conduit 711 in the valve body 701 cooperate with the heat exchanger inlet coolant tube 716 and outlet coolant tube 717 to create a continuous coolant circuit. The heat exchanger coolant tubes are sealed in the valve body coolant conduits with the aid of o-ring seals 740. The cross section of Figure 31 also shows how the cooling plates 720 join together to form the heat exchanger coolant inlet header 733 and the heat exchanger coolant outlet header 732. Gas blockage features 722 are stamped into the cooling plates 720 to prevent exhaust gases from bypassing the primary heat exchanger surfaces and fin packs in the region between the coolant headers.

An alternative embodiment to the heat exchanger shown in Figures 28 to 31 would have a similar structure for the heat exchanger core shown in Figure 30, only the working fluid inlet 716 and outlet 717 would pass through the bottom cover 709 rather than connecting into the valve body 701. Such an arrangement may be desirable in the case that the valve body 701 is a fabricated wrought structure rather than made from a casting.

The EGHR valve housings described here may be manufactured as a single, integrally formed component and may be cast or fabricated from wrought materials. A material from which the valve housing is formed may be selected depending on a range of temperatures and/or other operating conditions that the EGHR system may be operating under in a given application. For applications in which the material of the valve housing will reach temperatures of about eight-hundred degrees Celsius (800 °C) during operation of the EGHR system, the valve housing may be formed from a ferritic cast iron, for example. For applications in which the material of the valve housing will reach temperatures of more than eight-hundred degrees Celsius (800 °C) during operation of the EGHR system, the valve housing may be formed from austenitic cast iron or a heat-resistant steel, for example. The valve shaft and valve diverter plate may be formed from a steel alloy such as a heat-resistant wrought steel, for example, and/or any other suitable material.

The heat exchanger assemblies may include a heat exchanger core defining generally parallel exhaust gas flow channels in communication with the heat exchange conduits in the valve housing. The exhaust gas flow channels may direct the exhaust gases in a two-pass, generally U-shaped flow path when the diverter plate is in the heat-exchange position. This allows the exhaust gas to contact more surface area of the entire heat exchanger core. A first portion of the exhaust gas flow channels may be formed by a part of the heat exchanger core disposed upstream of the diverter plate and the second portion of the exhaust gas flow channels may be formed by a part of the heat exchanger core disposed downstream of the diverter plate.

When the valve diverter plate is in the bypass position, exhaust gases may enter the valve housing through the inlet opening and may flow through the bypass conduit to bypass the heat exchanger assembly. In this operating mode, little or no heat will be transferred from the exhaust gas to the working fluid in the heat exchanger assembly.

An additional benefit of the EGHR valve assemblies shown here is that the potential for internal exhaust gas leakage around the diverter plate and through the heat exchanger core is low when the diverter plate is in the bypass position. This potential for internal leakage is low because the pressure drop through the bypass conduit is minimal, thus minimizing the root cause that could drive unwanted flow past the diverter plate and into the heat exchanger core. This internal flow leakage is undesirable because it would increase heat transfer between the exhaust gases and the heat exchanger working fluid when it is unwanted. Furthermore, if and when exhaust gases do leak past the valve diverter plate and into the heat exchanger core when the valve diverter plate is in the bypass position, minimal unwanted heat transfer will result because the leaked gases may be prevented from flowing past the diverter plate a second time to reach the outlet opening.

Furthermore, the substantial lack of leakage around the diverter plate in the bypass position and the physical separation between the bypass conduit and the heat exchanger assembly allows the flow of exhaust gas entering the inlet opening to flow through the valve housing in a manner that substantially thermally isolates the exhaust gas from the working fluid in the heat exchanger assembly. Accordingly, very little or no heat transfer may occur therebetween in the bypass mode when such heat transfer may be undesirable. If any small amount of leakage past the diverter plate were to occur when the diverter plate is in the bypass position, the velocity of flow once the exhaust gas leaked past the diverter plate would be very low and would be prevented or restricted from flowing into the heat exchanger assembly or leaking past the diverter plate a second time and reaching the outlet opening.

The EGHR systems presented here can be utilized as an independent or self-contained system that can be inserted into an exhaust gas stream wherever there is sufficient packaging space. It should be noted that these EGHR systems can be integrated into other components in the exhaust system.

While the following examples and discussion generally relate to exhaust gas heat recovery applications, the general concepts discussed herein are also applicable to other "exhaust applications" such as thermal protection of exhaust components, or EGR systems, for example. The principles of the present disclosure can be employed in exhaust systems associated with internal or external combustion systems for stationary or transportation applications. It will be appreciated that an assembly including the valve housings and heat exchangers described above may be used to transfer heat between other fluids in other applications (e.g., charge air cooling applications, lubricant heating applications, etc.). Therefore, the principles of the present disclosure are not limited in application to transferring heat from engine exhaust gas to a working fluid. In some embodiments, the valve assembly and heat exchanger could be used to transfer heat between a working fluid and ambient air or air to be drawn into an engine for combustion.

In some embodiments, the EGHR systems may be configured to transfer heat from exhaust gases directly or indirectly to additional or alternative vehicle fluids, such as lubricants for an engine, a transmission, an axle, and/or a differential, for example, and/or any other fluid. For example, a lubricant or other fluid may flow into the heat exchanger core of the heat exchanger assembly to absorb heat from the exhaust gas when the diverter plate is not in the bypass position. In this manner, the EGHR system may transfer heat from exhaust gas to the lubricant and/or other fluid to optimize a viscosity of the fluid, for example, to improve the performance and/or fuel-economy of the vehicle.

The foregoing description of the embodiments has been provided for purposes of illustration and description. It is not intended to be exhaustive or to limit the disclosure.

## Claims

1. A system for recovering heat from exhaust gas of an internal combustion engine, the system comprising:
a body (50) including an inlet (51), an outlet (59) a first exhaust gas pathway (132) in communication with the inlet and the outlet, and a second exhaust gas pathway (132) in communication with the inlet and the outlet, the body adapted to receive exhaust gas from the internal combustion engine;
a valve member (80) disposed within the body and movable between a first position allowing fluid flow through the first exhaust gas pathway and restricting fluid flow through the second exhaust gas pathway and a second position allowing fluid flow through the second exhaust gas pathway and restricting fluid flow through the first exhaust gas pathway; and
a heat exchanger (17) in communication with the second exhaust gas pathway and including a plurality of cooling plates (100) arranged parallel to each other and defining an exhaust passage (132) and a working fluid passage (150a, 150b), the exhaust passage defining a generally U-shaped flow path therethrough, **characterised in that** the working fluid passage including first and second generally U-shaped flow paths (150a, 150b) receiving working fluid from a working fluid inlet (57) and providing working fluid to a working fluid outlet (58), the second U-shaped flow path is disposed within the first U-shaped flow path, wherein a divider (117) defines the first and second generally U-shaped flow paths and includes leakage openings (151) through which working fluid leaks between the first and second generally U-shaped flow paths.

2. The system of Claim 1, wherein the plurality of cooling plates includes first, second, third and fourth cooling plates, the first and second cooling plates defining the working fluid passage therebetween, the third and fourth cooling plates defining another working fluid passage therebetween, the second and third cooling plates defining the exhaust passage therebetween, the first cooling plate defining another exhaust passage.

3. The system of Claim 2, wherein the heat exchanger includes another divider defining the first and second generally U-shaped flow paths and including leakage openings through which working fluid leaks between the first and second generally U-shaped flow paths.

4. The system of Claim 3, wherein one of the dividers is generally U-shaped and the other divider is generally straight.

5. The system of Claim 1, wherein the cooling plates are arranged parallel to a direction of fluid flow through the first exhaust gas pathway.

6. The system of Claim 1, wherein the heat exchanger includes a housing in which the cooling plates are disposed.

7. The system of Claim 6, wherein the heat exchanger includes first and second deflector plates disposed within the housing at respective first and second opposing edges of the cooling plates.

8. The system of Claim 7, wherein the housing includes a proximal end attached to the body and a distal end opposite the proximal end, and wherein the working fluid inlet and the working fluid outlet are disposed in respective corners of the housing at or near the distal end.

9. The system of Claim 8, wherein the heat exchanger includes a fin pack disposed between adjacent cooling plates and disposed in the exhaust passage.

10. The system of Claim 6, wherein the housing includes a proximal end attached to the body and a distal end opposite the proximal end, and wherein the working fluid inlet and the working fluid outlet are disposed along a line extending between the distal and proximal ends and guide exhaust gas in a U-shaped path through the heat exchanger.

11. The system of Claim 10, wherein at least one of the cooling plates includes a plurality of dimples protruding into the exhaust passage.

12. The system of Claim 1, further comprising a deflector attached to edges of the cooling plates adjacent the body, the deflector preventing leakage of exhaust gas between the valve member and the edges of the cooling plates when the valve member is in the second position, and wherein the valve member abuts the deflector in the second position.

## Patentansprüche

1. System zur Rückgewinnung von Wärme aus Abgas eines Verbrennungsmotors, wobei das System umfasst:
einen Körper (50) umfassend einen Einlass (51), einen Auslass (59), einen mit dem Einlass und dem Auslass in Verbindung stehenden ersten Abgasweg (132) und einen mit dem Einlass und dem Auslass in Verbindung stehenden zweiten Abgasweg (132), wobei der Körper zur Aufnahme von Abgas des Verbrennungsmotors angepasst ist;
ein Ventilelement (80), das innerhalb des Körpers angeordnet ist und zwischen einer ersten Position, die eine Fluidströmung durch den ersten Abgasweg erlaubt und eine Fluidströmung durch den zweiten Abgasweg begrenzt, und einer zweiten Position, die eine Fluidströmung durch den zweiten Abgasweg erlaubt und eine Fluidströmung durch den ersten Abgasweg begrenzt, beweglich ist; und
einen mit dem zweiten Abgasweg in Verbindung stehenden Wärmetauscher (17), der eine Mehrzahl von Kühlplatten (100) aufweist, die parallel zueinander angeordnet sind und einen Abgasdurchgang (132) und einen Arbeitsmediumdurchgang (150a, 150b) definieren, wobei der Abgasdurchgang einen im Allgemeinen U-förmigen Strömungsweg durch diesen definiert, **dadurch gekennzeichnet, dass** der Arbeitsmediumdurchgang einen ersten und zweiten im Allgemeinen U-förmigen Strömungsweg (150a, 150b) umfasst, der Arbeitsmedium aus einem Arbeitsmediumeinlass (57) empfängt und Arbeitsmedium für einen Arbeitsmediumauslass (58) bereitstellt, wobei der zweite U-förmige Strömungsweg innerhalb des ersten U-förmigen Strömungswegs angeordnet ist, wobei ein Teiler (117) den ersten und zweiten im Allgemeinen U-förmigen Strömungsweg definiert und Leckageöffnungen (151) umfasst, durch welche hindurch Arbeitsmedium zwischen den ersten und zweiten im Allgemeinen U-förmigen Strömungsweg ausströmt.

2. System nach Anspruch 1, wobei die Mehrheit von Kühlplatten eine erste, zweite, dritte und vierte Kühlplatte umfasst, wobei die erste und zweite Kühlplatte den dazwischen befindlichen Arbeitsmediumdurchgang definieren, die dritte und vierte Kühlplatte einen anderen dazwischen befindlichen Arbeitsmediumdurchgang definieren, die zweite und dritte Kühlplatte den dazwischen befindlichen Abgasdurchgang definieren, und die erste Kühlplatte einen anderen Abgasdurchgang definiert.

3. System nach Anspruch 2, wobei der Wärmetauscher einen anderen Teiler umfasst, der den ersten und zweiten im Allgemeinen U-förmigen Strömungsweg definiert und Leckageöffnungen umfasst, durch welche hindurch Arbeitsmedium zwischen den ersten und zweiten im Allgemeinen U-förmigen Strömungsweg ausströmt.

4. System nach Anspruch 3, wobei einer der Teiler im Allgemeinen U-förmig ist, und der andere Teiler im Allgemeinen gerade ist.

5. System nach Anspruch 1, wobei die Kühlplatten parallel zu einer Fluidströmungsrichtung durch den ersten Abgasweg angeordnet sind.

6. System nach Anspruch 1, wobei der Wärmetauscher ein Gehäuse umfasst, in welchem die Kühlplatten angeordnet sind.

7. System nach Anspruch 6, wobei der Wärmetauscher eine erste und zweite Prallplatte umfasst, die im Gehäuse an jeweiligen ersten und zweiten entgegengesetzten Rändern der Kühlplatten angeordnet sind.

8. System nach Anspruch 7, wobei das Gehäuse ein an dem Körper befestigtes proximales Ende und ein dem proximalen Ende entgegengesetztes distales Ende umfasst, und wobei der Arbeitsmediumeinlass und der Arbeitsmediumauslass in jeweiligen Ecken des Gehäuses bei dem oder in der Nähe des distalen Ende(s) angeordnet sind.

9. System nach Anspruch 8, wobei der Wärmetauscher einen zwischen aneinander angrenzenden Kühlplatten angeordneten Rippenbündel umfasst, der in dem Abgasdurchgang angeordnet ist.

10. System nach Anspruch 6, wobei das Gehäuse ein an dem Körper befestigtes proximales Ende und ein dem proximalen Ende entgegengesetztes distales Ende umfasst, und wobei der Arbeitsmediumeinlass und der Arbeitsmediumauslass entlang einer zwischen dem distalen und dem proximalen Ende sich erstreckenden Linie angeordnet sind und Abgas in einen U-förmigen Pfad durch den Wärmetauscher hindurch führen.

11. System nach Anspruch 10, wobei mindestens eine der Kühlplatten eine Mehrzahl von Grübchen umfasst, die in den Abgasdurchgang vorspringen.

12. System nach Anspruch 1, ferner umfassend eine Prallplatte, die an den an den Körper angrenzenden Rändern der Kühlplatten befestigt ist, wobei die Prallplatte eine Leckage von Abgas zwischen dem Ventilelement und den Rändern der Kühlplatten verhindert, wenn sich das Ventilelement in der zweiten Position befindet, und wobei das Ventilelement in der zweiten Position an die Prallplatte angrenzt.

## Revendications

1. Système pour récupérer de la chaleur provenant de gaz d'échappement d'un moteur à combustion intérieur, le système comprenant :
un corps (50) comprenant une entrée (51), une sortie (59), un premier chemin de gaz d'échappement (132) en communication avec l'entrée et la sortie, et un deuxième chemin de gaz d'échappement (132) en communication avec l'entrée et la sortie, le corps étant adapté pour recevoir des gaz d'échappement provenant du moteur à combustion intérieur ;
un élément de soupape (80) disposé à l'intérieur du corps et étant mobile entre une première position permettant un écoulement de fluide à travers le premier chemin de gaz d'échappement et limitant un écoulement de fluide à travers le deuxième chemin de gaz d'échappement et une deuxième position permettant un écoulement de fluide à travers le deuxième chemin de gaz d'échappement et limitant un écoulement de fluide à travers le premier chemin de gaz d'échappement ; et
un échangeur de chaleur (17) en communication avec le deuxième chemin de gaz d'échappement et comprenant une pluralité de plaques de refroidissement (100) agencées l'une parallèlement à l'autre et définissant un passage d'échappement (132) et un passage de fluide de travail (150a, 150b), le passage d'échappement définissant un trajet d'écoulement généralement en forme de U à travers celui-ci, **caractérisé en ce que** le passage de fluide de travail comprenant les premier et deuxième trajets d'écoulement généralement en forme de U (150a, 150b) recevant un fluide de travail à partir d'une entrée de fluide de travail (57) et fournissant un fluide de travail à une sortie de fluide de travail (58), le deuxième trajet d'écoulement en forme de U étant disposé dans le premier trajet d'écoulement en forme de U, dans lequel un diviseur (117) définit les premier et deuxième trajets d'écoulement généralement en forme de U et comprend des ouvertures de fuite (151) à travers lesquelles un fluide de travail fuit entre les premier et deuxième trajets d'écoulement généralement en forme de U.

2. Système selon la revendication 1, dans lequel la pluralité de plaques de refroidissement comprend des première, deuxième, troisième et quatrième plaques de refroidissement, les première et deuxième plaques de refroidissement définissant le passage de fluide de travail entre elles, les troisième et quatrième plaques de refroidissement définissant un autre passage de fluide de travail entre elles, les deuxième et troisième plaques de refroidissement définissant le passage d'échappement entre elles, la première plaque de refroidissement définissant un autre passage d'échappement.

3. Système selon la revendication 2, dans lequel l'échangeur de chaleur comprend un autre diviseur définissant les premier et deuxième trajets d'écoulement généralement en forme de U et comprenant des ouvertures de fuite à travers lesquelles un fluide de travail fuit entre les premier et deuxième trajets d'écoulement généralement en forme de U.

4. Système selon la revendication 3, dans lequel l'un des diviseurs est généralement en forme de U et l'autre diviseur est généralement droit.

5. Système selon la revendication 1, dans lequel les plaques de refroidissement sont agencées parallèlement à une direction d'écoulement de fluide à travers le premier chemin de gaz d'échappement.

6. Système selon la revendication 1, dans lequel l'échangeur de chaleur comprend un boîtier dans lequel les plaques de refroidissement sont disposées.

7. Système selon la revendication 6, dans lequel l'échangeur de chaleur comprend des première et deuxième plaques déflectrices disposées à l'intérieur du boîtier au niveau des premier et deuxième bords opposés respectifs des plaques de refroidissement.

8. Système selon la revendication 7, dans lequel le boîtier comprend une extrémité proximale fixée au corps et une extrémité distale opposée à l'extrémité proximale, et dans lequel l'entrée de fluide de travail et la sortie de fluide de travail sont disposées dans des coins respectifs du boîtier au niveau de l'extrémité distale ou près de celle-ci.

9. Système selon la revendication 8, dans lequel l'échangeur de chaleur comprend un paquet d'ailettes disposé entre des plaques de refroidissement adjacentes et disposé dans le passage d'échappement.

10. Système selon la revendication 6, dans lequel le boîtier comprend une extrémité proximale fixée au corps et une extrémité distale opposée à l'extrémité proximale, et dans lequel l'entrée de fluide de travail et la sortie de fluide de travail sont disposées le long d'une ligne s'étendant entre les extrémités distale et proximale et guident des gaz d'échappement dans un trajet en forme de U à travers l'échangeur de chaleur.

11. Système selon la revendication 10, dans lequel au moins l'une des plaques de refroidissement comprend une pluralité de bosses faisant saillie dans le passage d'échappement.

12. Système selon la revendication 1, comprenant en outre un déflecteur fixé aux bords des plaques de refroidissement adjacentes au corps, le déflecteur empêchant la fuite de gaz d'échappement entre l'élément de soupape et les bords des plaques de refroidissement lorsque l'élément de soupape est dans la deuxième position, et dans lequel l'élément de soupape bute contre le déflecteur dans la deuxième position.
